(19) **Europäisches Patentamt / European Patent Office / Office européen des brevets**

(11) **EP 4 340 992 B1**

(12) **FASCICULE DE BREVET EUROPEEN**

(45) Date de publication et mention de la délivrance du brevet:
**09.07.2025 Bulletin 2025/28**

(21) Numéro de dépôt: **22728619.2**

(22) Date de dépôt: **12.05.2022**

(51) Classification Internationale des Brevets (IPC):
*B01J 29/74* (2006.01)  *B01J 29/80* (2006.01)
*B01J 37/02* (2006.01)  *C01B 39/02* (2006.01)
*C01B 39/48* (2006.01)  *B01D 53/94* (2006.01)

(52) Classification Coopérative des Brevets (CPC):
**B01J 29/74; B01D 53/9418; B01J 29/80; B01J 37/0246; C01B 39/023; C01B 39/026; C01B 39/48;** B01D 2253/108; B01D 2255/1023; B01D 2255/50; B01D 2255/502

(86) Numéro de dépôt international:
**PCT/EP2022/062938**

(87) Numéro de publication internationale:
**WO 2022/243165 (24.11.2022 Gazette 2022/47)**

(54) **SYNTHESE D'UN CATALYSEUR COMPOSITE A BASE DE ZEOLITHE AFX-BEA CONTENANT DU PALLADIUM POUR L'ADSORPTION DES NOX**

SYNTHESE EINES PALLADIUM ENTHALTENDEN ZUSAMMENGESETZTEN AFX-BEA-ZEOLITHKATALYSATORS ZUR NOX-ADSORPTION

SYNTHESIS OF A COMPOSITE AFX-BEA ZEOLITE CATALYST CONTAINING PALLADIUM FOR NOX ADSORPTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2021 FR 2105315**

(43) Date de publication de la demande:
**27.03.2024 Bulletin 2024/13**

(73) Titulaire: **IFP Energies nouvelles**
**92500 Rueil-Malmaison (FR)**

(72) Inventeurs:
• **BERTHOUT, David**
**92852 RUEIL-MALMAISON CEDEX (FR)**

• **MARTINEZ-FRANCO, Raquel**
**92852 RUEIL-MALMAISON CEDEX (FR)**
• **BOUALLEG, Malika**
**92852 RUEIL-MALMAISON CEDEX (FR)**
• **HARBUZARU, Bogdan**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
**WO-A1-2019/224090     US-A1- 2020 378 286**

EP 4 340 992 B1

**Description**

**DOMAINE TECHNIQUE**

L'invention se rapporte à un procédé de préparation d'un catalyseur composite zéolithique composé d'un mélange de zéolithes de type structural AFX et de type structural BEA et contenant du palladium, le catalyseur préparé ou susceptible d'être préparé par le procédé selon l'une quelconque de ses variantes, et son utilisation en tant qu'adsorbeur passif de NOx, en particulier sur les moteurs à combustion interne.

**TECHNIQUE ANTERIEURE**

Les émissions d'oxydes d'azote (NOx) qui résultent de la combustion de combustibles fossiles sont une préoccupation majeure pour la société. Des normes de plus en plus sévères sont mises en place par les instances gouvernementales afin de limiter l'impact des émissions issues de la combustion sur l'environnement et sur la santé. La réduction catalytique sélective, désignée par l'acronyme anglo-saxon « SCR » pour « Selective Catalytic Reduction », apparaît comme une technologie efficace pour éliminer les oxydes d'azote dans les gaz d'échappement riches en oxygène, typiques des moteur Diesel et à allumage commandé en mélange pauvre. La réduction catalytique sélective est réalisée grâce à un réducteur, généralement l'ammoniac, et peut ainsi être désignée par NH₃-SCR. Les zéolithes échangées avec des métaux de transition sont notamment utilisées comme catalyseurs pour les applications NH₃-SCR, dans les transports. Les zéolithes à petit pores, en particulier les chabazites échangées au cuivre, sont particulièrement adaptées. Pour les moteurs à allumage commandé qui fonctionnent à la stœchiométrie, les catalyseurs trois voies (TWC) sont très efficaces pour réduire les NOx lorsque leur formulation est adaptée.

Cependant, pendant un démarrage à froid ou plus généralement lorsque les températures à l'échappement sont inférieures à 180-200°C, aucun des deux systèmes ne peut traiter efficacement les émissions de NOx. En effet, la décomposition de la solution d'urée aqueuse qui nécessite des températures supérieures à 180°C limite l'efficacité NH₃-SCR et pour ce qui est du catalyseur TWC une optimisation de l'activité basse température est toujours possible mais semble tout de même très difficile à atteindre.

Les dispositifs capables de stocker les NOx à basses températures et de les libérer thermiquement offrent la possibilité de remédier au manque d'efficacité des systèmes SCR et TWC aux basses températures. Si le concept n'est pas nouveau, proposé par Ford Global Technologies LLC (U.S. Patent No.6,182,443) et BASF Catalysts LCC (U.S. Patent No.6,471,924) dans la fin des années 1990, les travaux récents ont mis en évidence qu'il s'agissait d'une des technologies les plus prometteuses pour la limitation des émissions de NOx au démarrage à froid. Ces systèmes sont souvent appelés adsorbeurs passifs de NOx ou PNA (Passive NOx Adsorber). Différents matériaux ont été évalués ces derniers temps pour l'adsorption et la désorption des NOx.

Dans le cadre d'un concept de démarrage à froid, Johnson Matthey Inc propose un adsorbeur à base de Palladium dispersé sur un oxyde de Cérium, un oxyde mixte ou un oxyde composite à base de Cérium peut être régénéré thermiquement (U.S. Patent No.8,105,559).

Le brevet US 2015/01580 19 A1 décrit l'utilisation d'une zéolithe avec un métal du groupe du platine en tant qu'adsorbeur en particulier l'utilisation d'une zéolithe de type CHA ou AEI. Différentes structures zéolithiques ont été explorées. L'adsorbeur passif de NOx comprend un métal noble et un tamis moléculaire ayant une structure de type OFF (US20190217269A1), de type MAZ (WO2016135465A1), de type LTL (WO2017/001828) ou de type STI (WO 2019/186163 A1). Le brevet WO 2020039015 A1 décrit un adsorbeur passif de NOx qui comprend une zéolithe 12MR et 8MR telles que la zéolithe de structure MOZ (ZSM-10) et qui contient du Palladium.

Le brevet US 2020/0061595A1 présente des adsorbeurs de NOx passifs à base de matériaux zéolithiques à petits pores avec des métaux de transition dispersés de manière atomique dans la microporosité. Les chargements de métaux élevés atomiquement dispersés dans les micropores d'une zéolite à petits pores, en particulier de type SSZ-13 (CHA), confèrent des propriétés d'adsorption importantes.

Les zéolithes de type structural AFX apparaissent dans la liste des zéolithes à petits pores qui peuvent être utilisés pour l'adsorption des NOx dans les demandes de brevets WO 2015/085303 A1 et WO2016135465A1. Cependant aucune de ces demandes de brevets ne met en avant l'avantage que confère cette structure, en particulier en fonction de son mode de synthèse.

Dans la publication Catal Lett 146, 1706-1711 (2016), l'évaluation des performances d'un catalyseur Pd / BEA montre de bonnes qualités en termes de stockage des NOx à 100°C mais elles se dégradent rapidement avec l'augmentation de la température. Une désorption des NOx est observée dès 200°C.

Les demandes de brevet WO2019/224090 et WO2019/224091 présentent des méthodes de synthèse d'un matériau composite zéolithique composé d'un mélange de zéolithes de type structural AFX et de type structural BEA.

La demanderesse a découvert qu'un nouveau catalyseur composite zéolithique composé d'un mélange intime de zéolithes de type structural AFX et de type structural BEA préparé selon un mode de synthèse particulier et contenant du palladium (Pd) présente non seulement une capacité totale de stockage des NOx augmentée, mais aussi une température de désorption des NOx plus élevée par rapport à l'art antérieur. Cette température de désorption est modulable en fonction de la proportion relatives des zéolithes BEA et AFX dans le matériau composite. De plus, ce catalyseur présente une stabilité hydrothermale élevée qui lui permet d'être utilisé dans les conditions sévères d'un échappement automobile.

## RESUME DE L'INVENTION

L'invention concerne un procédé de préparation d'un catalyseur composite zéolithique comprenant un mélange de zéolithes de type structural AFX et de type structural BEA et du palladium, comprenant au moins les étapes suivantes :

i) le mélange en milieu aqueux, d'une zéolithe ou d'un mélange de zéolithes de type structural FAU ayant un ratio molaire total $SiO_{2\,(FAU)}/Al_2O_{3\,(FAU)}$ compris entre 20 et 60, bornes incluses, d'un composé organique azoté MPC6, MPC6 étant le dihydroxyde de 1,6-bis(méthylpiperidinium)hexane, d'au moins une source de cations sodium, le mélange réactionnel présentant la composition molaire suivante :

$(SiO_{2\,(FAU)})/(Al_2O_{3\,(FAU)})$ compris entre 20 et 60, bornes incluses,
$H_2O/(SiO_{2\,(FAU)})$ compris entre 5 et 60,
$MPC6/(SiO_{2\,(FAU)})$ compris entre 0,10 et 0,50,
$Na_2O/(SiO_{2\,(FAU)})$ compris entre 0,05 et 0,11, bornes incluses, $SiO_{2\,(FAU)}$ désigne la quantité de $SiO_2$ apportée par la(les) zéolithe(s) FAU, et $Al_2O_{3\,(FAU)}$ désigne la quantité de $Al_2O_3$ apportée par la(les) zéolithe(s) FAU, jusqu'à l'obtention d'un gel précurseur homogène ;

ii) le traitement hydrothermal dudit gel précurseur obtenu à l'issue de l'étape i) à une température comprise entre 160°C et 220°C, pendant une durée comprise entre 12 et 150 heures pour obtenir un matériau composite zéolithique AFX-BEA ;
iii) une étape de filtration, lavage et séchage du matériau composite zéolithique AFX-BEA obtenu à l'issue de l'étape ii), ledit séchage étant réalisé à une température comprise entre 60 et 120°C, pendant une durée comprise entre 5 et 24 heures pour obtenir un matériau composite zéolithique AFX-BEA séché, suivie d'une calcination dudit matériau composite zéolithique AFX-BEA séché à une température comprise entre 500 et 700°C pendant une durée comprise entre 2 et 20 heures, la calcination pouvant être précédée d'une montée en température progressive, pour obtenir un matériau composite zéolithique AFX-BEA calciné ;
iv) au moins une étape d'échange ionique du matériau composite zéolithique AFX-BEA calciné obtenu à l'étape iii) comprenant la mise en contact du matériau composite zéolithique AFX-BEA calciné obtenu à l'étape iii), avec une solution contenant des cations ammonium, de préférence du nitrate d'ammonium, sous agitation à une température comprise entre 20 et 95°C, de préférence entre 60 et 85°C pendant une durée comprise entre 1 heure et 2 jours pour obtenir un matériau calciné sous forme ammonium, qui est de nouveau séché à une température comprise entre 60 et 120°C ;
v) dépôt de la solution de palladium sur le matériau composite zéolithique AFX-BEA calciné sous forme ammonium et séché.

La solution de palladium peut être déposée à l'étape v) par imprégnation à sec ou par voie colloïdale.
Le mélange réactionnel de l'étape i) peut comprendre au moins une source additionnelle d'aluminium sous forme oxyde notée : $Al_2O_{3\,(C)}$, le mélange réactionnel de l'étape i) ayant la composition molaire suivante :

$SiO_{2\,(FAU)}/(Al_2O_{3\,(FAU)} + Al_2O_{3\,(C)})$ compris entre 20 et 60,
$H_2O/SiO_{2\,(FAU)}$ compris entre 5 et 60
$MPC6/SiO_{2\,(FAU)}$ compris entre 0,10 et 0,50
$Na_2O/SiO_{2\,(FAU)}$ compris entre 0,05 et 0,11, bornes incluses,

$SiO_{2\,(FAU)}$ étant la quantité de $SiO_2$ apportée par la zéolithe FAU, $Al_2O_{3\,(FAU)}$ étant la quantité de $Al_2O_3$ apportée par la zéolithe FAU et $Al_2O_{3\,(C)}$ étant la quantité de $Al_2O_3$ apportée par la source additionnelle d'aluminium considéré sous sa forme oxyde, MPC6 étant le composé organique azoté 1,6-bis(méthylpiperidinium)hexane sous sa forme dihydroxyde.
Ladite source d'aluminium additionnelle peut être choisie parmi l'hydroxyde d'aluminium ou un sel d'aluminium, un aluminate de sodium, un alkoxyde d'aluminium, ou de l'alumine pris seuls ou en mélange, de préférence ladite source d'aluminium conventionnelle est l'hydroxyde d'aluminium.
La source de cations sodium est avantageusement l'hydroxyde de sodium.
On peut ajouter des germes cristallins d'une zéolithe de type structural AFX ou d'unezéolithe de type structural BEA ou d'un mélange des deux au mélange réactionnel de l'étape i), de préférence en quantité comprise entre 0,01 et 10% poids par rapport à la masse totale des sources de $SiO_2$ et d'$Al_2O_3$ sous forme anhydre présentes dans ledit mélange, lesdits germes cristallins n'étant pas pris en compte dans la masse totale des sources de $SiO_2$ et d'$Al_2O_3$.

L'étape i) peut comprendre une étape de mûrissement du mélange réactionnel à une température comprise entre 20 et 100°C, avec ou sans agitation, pendant une durée comprise entre 30 minutes et 48 heures.

La teneur en palladium introduite par l'étape de dépôt v) peut être comprise entre 0,5 à 5% massique, de préférence entre 0,8 et 3% massique, de manière plus préférée entre 0,9 et 2% massique, très avantageusement autour de 1% massique par rapport à la masse totale du catalyseur composite anhydre.

L'invention concerne également un catalyseur composite zéolithique AFX-BEA contenant du palladium obtenu par le procédé de préparation selon l'une quelconque de ses variantes.

Avantageusement, le catalyseur composite zéolithique AFX-BEA selon l'invention a un rapport $SiO_2/Al_2O_3$ compris entre 6 et 80, bornes incluses, de préférence entre 10 et 40, bornes incluses.

Le rapport massique entre les quantités de zéolithes de type structural AFX et de type BEA dans ledit catalyseur est compris entre 0,9 et 5,7.

Avantageusement, la teneur en palladium dans ledit catalyseur est comprise entre 0,5 et 5% massique, de préférence entre 0,8 et 3% massique, de manière plus préférée entre 0,9 et 2% massique, très avantageusement autour de 1% massique par rapport à la masse totale du catalyseur final anhydre et la dispersion métallique du palladium mesurée par chimisorption de CO est comprise entre 40 et 100%, de préférence entre 50 et 100%.

L'invention concerne également l'utilisation du catalyseur selon l'une quelconque des variantes décrites ou obtenu par le procédé selon l'une quelconque des variantes décrites, pour la réduction sélective de $NO_x$ par un réducteur tel que $NH_3$ ou $H_2$.

Le catalyseur peut être mis en forme par dépôt sous forme de revêtement sur une structure nid d'abeilles ou une structure à plaques.

Ladite structure nid d'abeilles peut être formée de canaux parallèles ouverts aux deux extrémités ou comporter des parois poreuses filtrantes pour lesquelles les canaux parallèles adjacents sont alternativement bouchés de part et d'autre des canaux.

La quantité de catalyseur déposé sur ladite structure peut être comprise entre 50 à 240 g/L pour les structures filtrantes et entre 50 et 320 g/L pour les structures avec canaux ouverts.

Le catalyseur peut être associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

Ledit revêtement peut être associé à un autre revêtement présentant des capacités d'adsorption de polluants en particulier de NOx, de réduction de polluants en particulier des NOx ou favorisant l'oxydation de polluants.

Dans un autre mode de réalisation, ledit catalyseur peut être sous forme d'extrudé, contenant jusqu'à 100% dudit catalyseur.

La structure revêtue par ledit catalyseur ou obtenue par extrusion dudit catalyseur peut être intégrée dans une ligne d'échappement d'un moteur à combustion interne.

## LISTE DES FIGURES

D'autres caractéristiques et avantages du procédé de préparation du catalyseur selon l'invention, apparaîtront à la lecture de la description ci-après d'exemples non limitatifs de réalisations, en se référant aux figures annexées et décrites ci-après.

La Figure 1 représente le diagramme de diffraction de rayons X (DRX) du matériau composite zéolithique composé d'un mélange de zéolithes de type structural AFX et de type structural BEA contenant du Pd, Pd/AFX-BEA1 obtenu selon l'exemple 2.

La Figure 2 représente le diagramme de diffraction de rayons X (DRX) du matériau composite zéolithique composé d'un mélange de zéolithes de type structural AFX et de type structural BEA contenant du Pd, Pd/AFX-BEA2 obtenu selon l'exemple 3.

La Figure 3 représente le diagramme de diffraction de rayons X (DRX) de la zéolithe de type structural AFX contenant du Pd obtenue selon l'exemple 5.

La Figure 4 représente le diagramme de diffraction de rayons X (DRX) de la zéolithe BEA (CP814E) contenant du Pd utilisée selon l'exemple 4.

La Figure 5 représente le diagramme de diffraction de rayons X (DRX) du mélange des zéolithes de type structural AFX et de type structural BEA (CP814E), Pd/AFX-BEA-meca1 obtenu selon l'exemple 5.

La Figure 6 représente les concentrations en NOx désorbées par les catalyseurs synthétisés suivant l'exemple 2 (Pd/AFX-BEA1, selon l'invention), l'exemple 3 (Pd/AFX-BEA2, selon l'invention), l'exemple 4 (Pd/BEA, comparatif) l'exemple 5 (Pd/AFX-BEA-meca1, comparatif) et l'exemple 6 (Pd/AFX-BEA-meca2, comparatif).

La Figure 7 représente les concentrations en NOx désorbées par les catalyseurs Pd/AFX-BEA1-vieilli, Pd/AFX-BEA2-vieilli, Pd/BEA-vieilli, Pd/AFX-BEA-meca1-vieilli et Pd/AFX-BEA-meca2-vieilli.

## DESCRIPTION DES MODES DE REALISATION

Sauf précision contraire, dans l'ensemble de la description, les gammes de valeurs s'entendent bornes incluses.

L'invention concerne plus particulièrement un procédé de préparation d'un catalyseur composite zéolithique composé d'un mélange intime de zéolithes de type structural AFX et de type structural BEA et contenant du palladium, comprenant au moins les étapes suivantes.

Etape i) : le mélange en milieu aqueux, d'une zéolithe ou d'un mélange de zéolithes de type structural FAU ayant un ratio molaire total $SiO_{2\,(FAU)}/Al_2O_{3\,(FAU)}$ compris entre 20 et 60, bornes incluses, d'un composé organique azoté MPC6, MPC6 étant le dihydroxyde de 1,6-bis(méthylpiperidinium)hexane, d'au moins une source de cations sodium, le mélange réactionnel présentant la composition molaire suivante :

$(SiO_{2\,(FAU)})/(Al_2O_{3\,(FAU)})$ compris entre 20 et 60,
$H_2O/(SiO_{2\,(FAU)})$ compris entre 5 et 60,
$MPC6/(SiO_{2\,(FAU)})$ compris entre 0,10 et 0,50,
$Na_2O/(SiO_{2\,(FAU)})$ compris entre 0,05 et 0,11, bornes incluses,
$SiO_{2(FAU)}$ désigne la quantité de $SiO_2$ apportée par la(les) zéolithe(s) FAU, et $Al_2O_{3\,(FAU)}$ désigne la quantité de $Al_2O_3$ apportée par la(les) zéolithe(s) FAU, jusqu'à l'obtention d'un gel précurseur homogène ;

De préférence, la source de cations sodium est l'hydroxyde de sodium.

Dans un autre mode de réalisation, le mélange réactionnel de l'étape i) peut comprendre au moins une source additionnelle conventionnelle, c'est-à-dire non issue d'une zéolithe déjà constituée, d'aluminium considéré sous sa forme oxyde notée : $Al_2O_{3\,(C)}$.

Dans ce cas, le mélange réactionnel de l'étape i) a de préférence la composition molaire suivante :

$SiO_{2\,(FAU)}/(Al_2O_{3\,(FAU)} + Al_2O_{3\,(C)})$ compris entre 20 et 60, bornes incluses
$H_2O/SiO_{2\,(FAU)}$ compris entre 5 et 60
$MPC6/SiO_{2\,(FAU)}$ compris entre 0,10 et 0,50
$Na_2O/SiO_{2\,(FAU)}$ compris entre 0,05 et 0,11, bornes incluses,
$SiO_{2(FAU)}$ étant la quantité de $SiO_2$ apportée par la zéolithe FAU, $Al_2O_{3(FAU)}$ étant la quantité de $Al_2O_3$ apportée par la zéolithe FAU et $Al_2O_{3\,(C)}$ étant la quantité de $Al_2O_3$ apportée par la source additionnelle conventionnelle d'aluminium considéré sous sa forme oxyde, MPC6 étant le composé organique azoté 1,6-bis(méthylpiperidinium)hexane sous sa forme dihydroxyde.

De préférence, la source de cations sodium est l'hydroxyde de sodium.

On peut ajouter des germes cristallins d'une zéolithe de type structural AFX ou BEA ou un mélange des deux au mélange réactionnel de l'étape i), lesdits germes étant introduits de préférence en quantité comprise entre 0,01 et 10% poids par rapport à la masse totale des sources de $SiO_2$ et d'$Al_2O_3$ sous forme anhydre présentes dans ledit mélange, lesdits germes cristallins n'étant pas pris en compte dans la masse totale des sources de $SiO_2$ et d'$Al_2O_3$.

La zéolithe ou le mélange de zéolithes de type structural FAU mises en oeuvre dans l'étape i) de synthèse ont un ratio molaire $SiO_2/Al_2O_3$ compris entre 20 et 60, bornes incluses.

La zéolithe ou le mélange de zéolithes de type structural FAU de départ ayant un ratio molaire $SiO_2/Al_2O_3$ compris entre 20 et 60, bornes incluses, peuvent être obtenus par n'importe quelle méthode connue par l'homme du métier comme par exemple par traitement à la vapeur (steaming) et des lavages acides sur une zéolithe de type structural FAU de ratio molaire $SiO_{2\,(FAU)}/Al_2O_{3\,(FAU)}$ inférieur à 6,00, ou par le mélange de zéolithes de type structural FAU de différents rapports $SiO_{2\,(FAU)}/Al_2O_{3\,(FAU)}$ pour obtenir un ratio molaire $SiO_{2\,(FAU)}/Al_2O_{3\,(FAU)}$ compris entre 20 et 60, bornes incluses. On peut citer, parmi les sources de FAU les zéolithes commerciales CBV712, CBV720, CBV760 et CBV780 produites par Zeolyst, les zéolithes commerciales HSZ-350HUA, HSZ-360HUA et HSZ-385HUA produites par TOSOH. La zéolithe de type structural FAU de départ peut aussi être utilisée dans sa forme sodique ou toute autre forme ou un échange partiel ou total des cations sodium avec des cations ammonium suivie ou non d'une étape de calcination.

La source additionnelle d'un oxyde $Al_2O_3$ est de préférence de l'hydroxyde d'aluminium ou un sel d'aluminium, par exemple du chlorure, du nitrate, ou du sulfate, un aluminate de sodium, un alkoxyde d'aluminium, ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus. De préférence la source additionnelle d'un oxyde $Al_2O_3$ est l'hydroxyde d'aluminium.

L'étape i) peut comprendre une étape de mûrissement du mélange réactionnel à une température comprise entre 20 et 100°C, avec ou sans agitation, pendant une durée comprise entre 30 minutes et 48 heures.

Etape ii) : le traitement hydrothermal dudit gel précurseur obtenu à l'issue de l'étape i) est conduit à une température comprise entre 160°C et 220°C, pendant une durée comprise entre 12 et 150 heures.

Avantageusement le rapport molaire $SiO_2/Al_2O_3$ du matériau composite zéolithique AFX-BEA obtenu est compris entre 6 et 80, bornes incluses, et de préférence entre 10 et 40, bornes incluses.

Etape iii) de filtration, lavage, séchage, et calcination ;

Dans cette étape, le matériau composite zéolithique AFX-BEA obtenu à l'issue de l'étape ii) est filtré, lavé, et séché à une température comprise entre 60 et 120°C, pendant une durée comprise entre 5 et 24 heures pour obtenir un matériau composite zéolithique AFX-BEA séché. Le matériau composite zéolithique AFX-BEA séché est ensuite calciné à une température comprise entre 500 et 700°C pendant une durée comprise entre 2 et 20 heures, la calcination pouvant être précédée d'une montée en température progressive.

Etape iv) d'échange ionique : au moins un échange ionique est mis en oeuvre sur le matériau composite zéolithique AFX-BEA calciné obtenu à l'étape iii) et comprend la mise en contact du matériau composite zéolithique AFX-BEA calciné obtenu à l'étape iii), avec une solution contenant des cations ammonium, de préférence du nitrate d'ammonium, sous agitation à des températures comprises entre 20 et 95°C de préférence entre 60 et 85°C pendant une durée comprise entre 1 heure et 2 jours pour obtenir un matériau calciné sous forme ammonium. A la fin de l'étape d'échange ionique le matériau composite zéolithique AFX-BEA calciné sous forme ammonium est séché de nouveau à une température comprise entre 60 et 120°C, de préférence pendant une durée comprise entre 5 et 24 heures. Cette étape d'échange ionique peut être répétée plusieurs fois dans le but d'obtenir un solide contenant moins de 0,01% Na massique.

Etape v) de dépôt du palladium : le dépôt de la solution de palladium, sur le matériau composite zéolithique AFX-BEA calciné sous forme ammonium et séché, peut être réalisé selon toutes les techniques connues de l'homme du métier.

De préférence, la solution de palladium est déposée par méthode d'imprégnation à sec ou par voie colloïdale.

La teneur en palladium introduite par l'étape de dépôt v) est avantageusement comprise entre 0,5 à 5% massique, de préférence entre 0,8 et 3% massique, de manière plus préférée entre 0,9 et 2% massique, très avantageusement autour de 1% massique par rapport à la masse totale du catalyseur composite anhydre.

**Imprégnation à sec**

Dans un mode de réalisation selon l'invention, la solution de palladium est déposée par méthode d'imprégnation à sec. Plus particulièrement, le procédé de préparation du catalyseur comprend les étapes suivantes :

a) on prépare une solution aqueuse comprenant au moins un sel précurseur du palladium ;

b) on imprègne le matériau composite zéolithique AFX-BEA sous forme ammonium et séché obtenu à l'étape iv) du procédé de préparation selon l'invention avec la solution aqueuse obtenue à l'étape a) à temperature ambiante.

c) on sèche le précurseur de catalyseur obtenu à l'issue de l'étape b) pour obtenir un précurseur de catalyseur séché ; Le précurseur du catalyseur est généralement séché afin d'éliminer toute ou une partie de l'eau introduite lors de l'imprégnation, de préférence à une température comprise entre 50°C et 250°C, de manière plus préférée entre 70°C et 200°C. La durée du séchage est de préférence comprise entre 0,5 et 20 heures. Des durées plus longues ne sont pas exclues, mais n'apportent pas nécessairement d'amélioration. Le séchage est généralement effectué sous air de combustion d'un hydrocarbure, de préférence du méthane, ou sous air chauffé comprenant entre 0 et 80 g d'eau par kg d'air de combustion, un taux d'oxygène compris entre 5% et 25% volume et un taux de dioxyde de carbone compris entre 0% et 10% volume.

d) optionnellement, on calcine le précurseur de catalyseur séché obtenu à l'étape c) à une température comprise entre 250 et 900°C pour obtenir un précurseur de catalyseur calciné ; Après séchage, le catalyseur peut être calciné sous air, de préférence de combustion, et plus préférentiellement un air de combustion du méthane, comprenant entre 40 et 80 g d'eau par kg d'air, un taux d'oxygène compris entre 5% et 15% volume et un taux de $CO_2$ compris entre 4% et 10% volume. La température de calcination est généralement comprise entre 250°C et 900°C, de préférence comprise entre 350°C et 550°C. La durée de calcination est généralement comprise entre 0,5 et 5 heures.

e) optionnellement, on réalise un traitement réducteur par mise en contact avec un gaz réducteur.

## Imprégnation par voie colloïdale

Dans un autre mode de réalisation selon l'invention, la solution de palladium est déposée par méthode colloïdale. Plus particulièrement, le procédé de préparation du catalyseur comprend les étapes suivantes :

a) préparation d'une solution aqueuse comprenant au moins un sel précurseur du palladium Lors de l'étape a), on prépare une solution aqueuse comprenant au moins un sel précurseur du palladium. Le sel précurseur du palladium est de préférence sélectionné parmi le chloropalladate de sodium et le nitrate de palladium.

b) préparation d'un support imprégné Le dépôt du palladium sur le matériau composite zéolithique AFX-BEA calciné sous forme ammonium et séché obtenu à l'étape iv) du procédé de préparation selon l'invention, est réalisé par imprégnation à sec de la solution aqueuse obtenue à l'étape a) sur le matériau composite zéolithique AFX-BEA calciné sous forme ammonium et séché, le volume de ladite solution aqueuse étant généralement compris entre 0,9 et 1,1 fois le volume poreux du matériau composite zéolithique AFX-BEA calciné sous forme ammonium et séché.

c) maturation du support imprégné lors de l'étape b) Après imprégnation, le matériau composite zéolithique AFX-BEA calciné sous forme ammonium et séché, est maturé à l'état humide pendant 0,5 à 40 heures, de manière préférée pendant 1 à 30 heures. Des durées plus longues ne sont pas exclues, mais n'apportent pas nécessairement d'amélioration.

d) séchage du précurseur de catalyseur obtenu à l'étape b) ou c) Le précurseur du catalyseur est généralement séché afin d'éliminer toute ou une partie de l'eau introduite lors de l'imprégnation, de préférence à une température comprise entre 50°C et 250°C, de manière plus préférée entre 70°C et 200°C. La durée du séchage est de préférence comprise entre 0,5 et 20 heures. Des durées plus longues ne sont pas exclues, mais n'apportent pas nécessairement d'amélioration.

Le séchage est généralement effectué sous air de combustion d'un hydrocarbure, de préférence du méthane, ou sous air chauffé comprenant entre 0 et 80 g d'eau par kg d'air de combustion, un taux d'oxygène compris entre 5% et 25% volume et un taux de dioxyde de carbone compris entre 0% et 10% volume.

e) calcination sous air de combustion du catalyseur séché obtenu à l'étape d) (étape optionnelle)

Après séchage, le catalyseur peut être calciné sous air, de préférence de combustion, et plus préférentiellement un air de combustion du méthane, comprenant entre 40 et 80 g d'eau par kg d'air, un taux d'oxygène compris entre 5% et 15% volume et un taux de $CO_2$ compris entre 4% et 10% volume. La température de calcination est généralement comprise entre 250°C et 900°C, de préférence comprise entre 350°C et 550°C. La durée de calcination est généralement comprise entre 0,5 et 5 heures.

La présente invention concerne également un catalyseur composite sous forme d'un matériau zéolithique composé d'un mélange de zéolithes de type structural AFX et de type structural BEA, et contenant du palladium, pouvant être préparé par le procédé selon un mode de réalisation de l'invention, ledit catalyseur composite ayant un rapport massique entre les quantités de zéolithe de type structural AFX et de zéolithe de type BEA compris entre 0,9 et 5,7.

La teneur en palladium du catalyseur composite zéolithique selon l'invention est avantageusement comprise entre 0,5 et 5% poids par rapport à la masse totale de catalyseur anhydre, de préférence entre 0,8 et 3% poids, de manière très préférée entre 0,9 % et 2% poids, très avantageusement autour de 1% poids.

Dans le catalyseur composite zéolithique selon l'invention, la dispersion du palladium mesurée par chimisorption du CO est avantageusement comprise entre 40 et 100%, de préférence entre 50 et 100%.

## Caractérisations du catalyseur selon invention

A l'issue des étapes de préparation ii), iii), iv), ou v) du catalyseur selon l'invention, la diffraction des rayons X permet de vérifier que le solide obtenu par le procédé selon l'invention est bien un matériau composite zéolithique AFX-BEA contenant les zéolithes de type structural AFX et BEA. La pureté obtenue est avantageusement supérieure à 90%, de préférence supérieure à 95%, de manière très préférée supérieure à 99,8% en poids.

En d'autres termes, le catalyseur composite zéolithique selon l'invention à base de matériau composite zéolithique AFX/BEA et contenant du palladium comprend moins de 5% massique, préférentiellement moins de 1% massique et de manière encore plus préférée moins de 0,2% massique d'impuretés et/ou de phase cristalline ou amorphe autre que AFX et BEA (les bornes n'étant pas incluses). De manière très avantageuse, le procédé de l'invention conduit à la formation d'un catalyseur à base de matériau composite zéolithique AFX-BEA, exempt de toute autre phase cristalline ou amorphe.

Cette technique permet aussi de déterminer les proportions relatives de chaque zéolithe, AFX et BEA, contenue dans ledit catalyseur selon l'invention ou obtenu par le procédé de l'invention selon l'une quelconque de ses variantes.

Avantageusement, le solide obtenu par le procédé selon l'invention présente le diagramme de diffraction de rayons X incluant au moins les raies inscrites dans le Tableau 1.

Ce diagramme de diffraction est obtenu par analyse radiocristallographique au moyen d'un diffractomètre en utilisant la méthode classique des poudres avec le rayonnement $K\alpha_1$ du cuivre ($\lambda$ = 1,5406Å). A partir de la position des pics de diffraction représentée par l'angle 2θ, on calcule, par la relation de Bragg, les équidistances réticulaires $d_{hkl}$ caractéristiques de l'échantillon. L'erreur de mesure $\Delta(d_{hkl})$ sur $d_{hkl}$ est calculée grâce à la relation de Bragg en fonction de l'erreur absolue $\Delta(2\theta)$ affectée à la mesure de 2θ. Une erreur absolue $\Delta(2\theta)$ égale à ± 0,02° est communément admise. L'intensité relative $I_{rel}$ affectée à chaque valeur de $d_{hkl}$ est mesurée d'après la hauteur du pic de diffraction correspondant. Le diagramme de diffraction des rayons X du solide cristallisé obtenu à l'issue de l'étape ii) du procédé selon l'invention comporte au moins les raies aux valeurs de $d_{hkl}$ données dans le Tableau 1 (Valeurs moyennes des $d_{hkl}$ et intensités relatives mesurées sur un diagramme de diffraction de rayons X du catalyseur composite zéolithique selon l'invention). Dans la colonne des $d_{hkl}$, on a indiqué les valeurs moyennes des distances inter-réticulaires en Angströms (Å). Chacune de ces valeurs doit être affectée de l'erreur de mesure $\Delta(d_{hkl})$ comprise entre ± 0,6Å et ± 0,01Å.

Table 1

| 2 thêta (°) | dhkl (Å) | Irel | 2 thêta (°) | dhkl (Å) | Irel |
|---|---|---|---|---|---|
| 7,49 | 11,79 | ff-f | 26,11 | 3,41 | f-m |
| 7,71 | 11,46 | ff-f | 26,94 | 3,31 | Ff |
| 8,71 | 10,14 | mf-m | 27,11 | 3,29 | Ff |
| 11,66 | 7,59 | f-mf | 27,61 | 3,23 | Ff |
| 12,97 | 6,82 | f | 28,04 | 3,18 | mf-m |
| 15,00 | 5,90 | ff | 28,68 | 3,11 | Ff |
| 15,40 | 5,75 | ff | 29,51 | 3,03 | Ff |
| 15,66 | 5,66 | f-mf | 30,19 | 2,96 | ff-f |
| 17,47 | 5,07 | mf | 30,58 | 2,92 | Mf |
| 17,90 | 4,95 | f-mf | 30,99 | 2,88 | Ff |
| 19,42 | 4,57 | ff | 31,59 | 2,83 | f-mf |
| 19,88 | 4,46 | ff-f | 32,50 | 2,75 | Ff |
| 20,38 | 4,36 | F-FF | 33,73 | 2,66 | f-mf |
| 21,08 | 4,21 | f | 34,29 | 2,61 | Ff |
| 21,31 | 4,17 | ff-f | 34,78 | 2,58 | Ff |
| 21,82 | 4,07 | F-FF | 35,11 | 2,55 | Ff |
| 22,19 | 4,00 | f-m | 35,79 | 2,51 | Ff |
| 22,34 | 3,98 | f-FF | 37,56 | 2,39 | Ff |
| 22,54 | 3,94 | ff-f | 38,00 | 2,37 | Ff |
| 22,70 | 3,91 | ff-f | 39,18 | 2,30 | Ff |
| 23,67 | 3,76 | mf | 39,61 | 2,30 | Ff |
| 25,24 | 3,52 | ff | | | |

où FF = très fort ; F = fort ; m = moyen ; mf = moyen faible ; f = faible ; ff = très faible. L'intensité relative $I_{rel}$ est donnée en rapport à une échelle d'intensité relative où il est attribué une valeur de 100 à la raie la plus intense du diagramme de diffraction des rayons X : ff < 15 ; 15 ≤ f < 30 ; 30 ≤ mf < 50 ; 50 ≤ m < 65 ; 65 ≤ F < 85 ; FF ≥ 85 ; 1 ≤ ff-f < 30 ; 30 ≤ mf-m < 65 ; 15 ≤ f-mf < 50 ; 65 ≤ F-FF ≤ 100 ; 15 ≤ f-m < 65 ; 15 ≤ f-FF ≤ 100.

Selon l'invention, la composition massique du matériau composite préparé, en particulier les fractions massiques relatives des zéolithes de type structural AFX et de type structural BEA présentes dans ledit catalyseur à base de matériau composite, est avantageusement déterminée à l'aide d'une méthode semblable à la norme ASTM D3906 03, par comparaison des surfaces des pics aux angles (2θ) 20,38 ± 0,1 (hkl : 211) ; 23,67 ± 0,1 (hkl : 105) ; 26,1 ± 0,1 (hkl : 303) et 28,02 ± 0,1 (hkl : 106) des diagrammes des rayons X obtenus pour le matériau composite selon l'invention et une zéolithe de type structural AFX de référence, de préférence de haute pureté. Le rapport massique des deux zéolithes AFX et BEA dans le matériau composite selon l'invention est ainsi évalué en comparant la somme des surfaces des pics aux angles (2θ) cités ci-avant obtenue pour le matériau composite préparé selon l'invention avec un échantillon de référence de zéolithe et en utilisant la formule de calcul suivante :

$$AFX/BEA = S_{AFXc}/(S_{AFXr} - S_{AFXc})$$

où $S_{AFXc}$ est la somme des surfaces des pics présents aux angles (2θ) 20,38 ± 0,1 (hkl : 211) ; 23,67 ± 0,1 (hkl : 105) ; 26,1 ± 0,1 (hkl : 303) et 28,02 ± 0,1 (hkl : 106) du diffractogramme du matériau composite AFX-BEA préparé selon l'invention et $S_{AFXr}$ est la somme des surfaces des pics présents aux angles (2θ) : 20,38 (hkl : 211) ; 23,67 (hkl : 105) ; 26,1 (hkl : 303) et 28,02 (hkl : 106) du diffractogramme de la zéolithe de type structural AFX pure, utilisée comme référence. La zéolithe de type structural AFX pure, utilisée comme référence, peut, par exemple, être préparée selon le procédé illustré dans l'exemple 5 de la présente divulgation.

La spectrométrie de fluorescence des rayons X (FX) est une technique d'analyse chimique utilisant une propriété physique de la matière, la fluorescence de rayons X. Elle permet l'analyse de la majorité des éléments chimiques à partir du Béryllium (Be) dans des gammes de concentration allant de quelques ppm à 100%, avec des résultats précis et reproductibles. On utilise les rayons X pour exciter les atomes qui sont dans l'échantillon, ce qui leur fait émettre des rayons X à énergie caractéristique de chaque élément présent. L'intensité et l'énergie de ces rayons X sont ensuite mesurées pour déterminer la concentration des éléments dans le matériau.

La perte au feu (PAF) du catalyseur obtenu après l'étape de séchage (et avant calcination) ou après l'étape de calcination de l'étape iii) du procédé selon l'invention est généralement comprise entre 2 et 20% poids. La perte au feu de l'échantillon de catalyseur, désignée sous l'acronyme PAF, correspond à la différence de masse de l'échantillon avant et après un traitement thermique à 1000°C pendant 2 heures. Elle est exprimée en % correspondant au pourcentage de perte de masse. La perte au feu correspond en général à la perte de solvant (comme l'eau) contenu dans le solide mais aussi à l'élimination de composés organiques contenus dans les constituants solides minéraux.

La dispersion de particules (D) est un nombre sans unité, souvent exprimé en %. La dispersion est d'autant plus grande que les particules sont petites. Elle est définie dans la publication de R. Van Hardeveld et F. Hartog, «The statistics of surface atoms and surface sites on metal crystals», Surface Science 15, 1969, 189-230. La dispersion peut être mesurée par chimisorption du CO.

## Catalyseur selon l'invention

La demanderesse a découvert que le catalyseur obtenu par le procédé selon l'invention présente des caractéristiques différentes des matériaux aluminosilicates microporeux comprenant du palladium connus de l'art antérieur. En particulier, le catalyseur composite zéolithique AFX-BEA contenant du palladium, obtenu par l'une quelconques des variantes du procédé selon l'invention présente une capacité d'adsorption et une température de désorption augmentées ainsi qu'une tenue hydrothermale supérieure.

Sans être lié par une quelconque théorie, il semblerait que le procédé de préparation du catalyseur selon l'invention permet notamment une meilleure dispersion du palladium, qui permet de contribuer aux performances catalytiques améliorées en réduction des Nox. Par ailleurs, la meilleure dispersion du palladium permet d'optimiser la quantité de palladium accessible et active, et d'utiliser des teneurs plus faibles en palladium tout en obtenant de très bonnes performances catalytiques.

Avantageusement, le rapport molaire $SiO_2/Al_2O_3$ du catalyseur à base de zéolithe composite AFX-BEA obtenu est compris entre 6 et 80, bornes incluses, de préférence entre 10 et 40, bornes incluses.

La teneur en palladium du catalyseur composite zéolithique selon l'invention est avantageusement comprise entre 0,5 et 5% poids par rapport à la masse totale de catalyseur anhydre, de préférence entre 0,8 et 3% poids, de manière très préférée entre 0,9 % et 2% poids, très avantageusement autour de 1% poids.

Dans le catalyseur composite zéolithique préparé selon l'invention, la dispersion du palladium est avantageusement comprise entre 40 et 100%, de préférence entre 50 et 100%.

## Utilisation du catalyseur selon l'invention

L'invention concerne également l'utilisation du catalyseur selon l'invention, directement préparé ou susceptible d'être préparé par le procédé décrit précédemment selon l'une quelconque de ses variantes, pour l'adsorption de NOx à températures inférieures à 200°C, avantageusement mis en forme par dépôt sous forme de revêtement (« washcoat » selon la terminologie anglo-saxonne) sur une structure nid d'abeilles principalement pour les applications mobiles.

La structure nid d'abeilles est formée de canaux parallèles ouverts aux deux extrémités (flow-through en anglais) ou comporte des parois poreuses filtrantes et dans ce cas les canaux parallèles adjacents sont alternativement bouchés de part et d'autre des canaux afin de forcer le flux de gaz à traverser la paroi (wall-flow monolith en anglais). Ladite structure nid d'abeilles ainsi revêtue constitue un pain catalytique. Ladite structure peut être composée de cordiérite, carbure de silicium (SiC), titanate d'aluminium (AlTi), alumine alpha, mullite ou tout autre matériau dont la porosité est comprise entre 30 et 70%. Ladite structure peut être réalisée en tôle métallique, en acier inoxydable contenant du Chrome et de l'Aluminium, acier de type FeCrAl.

La quantité de catalyseur selon l'invention déposé sur ladite structure est comprise entre 50 à 240 g/L pour les structures filtrantes et entre 50 et 320 g/L pour les structures avec canaux ouverts.

Le revêtement proprement dit (« washcoat ») comprend le catalyseur selon l'invention, avantageusement associé à un liant tel que la cérine, l'oxyde de zirconium, l'alumine, la silice-alumine non zéolithique, l'oxyde de titane, un oxyde mixte de type cérine-zircone, un oxyde de tungstène, une spinelle. Ledit revêtement est avantageusement appliqué à ladite structure par une méthode de dépôt (washcoating en anglais) qui consiste à tremper le monolithe dans une suspension (slurry en anglais) de poudre de catalyseur selon l'invention dans un solvant, de préférence de l'eau, et potentiellement des liants, oxydes métalliques, stabilisateurs ou autres promoteurs. Cette étape de trempe peut être répétée jusqu'à atteindre la quantité souhaitée de revêtement. Dans certains cas le slurry peut aussi être pulvérisé au sein du monolithe. Le revêtement une fois déposé, le monolithe est calciné à une température de 300 à 600°C pendant 1 à 10 heures.

Ladite structure peut être revêtue d'un ou plusieurs revêtements. Le revêtement comprenant le catalyseur selon l'invention est avantageusement associé à, c'est-à-dire recouvre ou est recouvert par, un autre revêtement présentant des capacités de réduction de polluants en particulier des NOx ou/et favorisant l'oxydation de polluants, en particulier le monoxyde de carbone (CO) et les hydrocarbures (HC).

Une autre possibilité est de mettre le catalyseur sous forme d'extrudé. Dans ce cas, la structure obtenue peut contenir jusqu'à 100% de catalyseur selon l'invention.

Ladite structure revêtue par le catalyseur selon l'invention est avantageusement intégrée dans une ligne d'échappement d'un moteur à combustion interne. Dans ces conditions de fonctionnement du moteur, les gaz d'échappement contiennent notamment les polluants suivants : des suies, des hydrocarbures imbrûlés (HC), du monoxyde de carbone (CO), des oxydes d'azotes (NOx). Ladite structure revêtue du catalyseur selon l'invention est placée en amont d'un catalyseur de traitement des NOx qui peut être un catalyseur $NH_3$-SCR, un NOxTrap ou un catalyseur trois voies. Un catalyseur d'oxydation dont la fonction est d'oxyder les HC et le CO ainsi qu'un filtre pour éliminer les suies des gaz d'échappement peuvent être placés de manière indifférente en amont ou en aval de ladite structure.

La fonction de ladite structure revêtue étant d'adsorber les NOx, sa gamme de fonctionnement se situant :

- entre -20C° et 300°C pour la phase d'adsorption, et de manière préférée entre -20°C et 200°C ;
- entre 150°C et 500°C pour la phase de désorption et de manière préférée entre 250°C et 400°C.

## AVANTAGES DE L'INVENTION

Le catalyseur selon l'invention, à base d'un matériau composite zéolithique composé d'un mélange intime de zéolithes de type structural AFX et de type structural BEA et contenant du palladium, présente des propriétés améliorées par rapport aux catalyseurs de l'art antérieur. En particulier, l'utilisation du catalyseur selon l'invention permet d'adsorber des NOx entre - 20°C et 200°C.

Il présente aussi une meilleure tenue en vieillissement hydrothermal, garantissant des performances d'adsorption élevées même après ce vieillissement.

## EXEMPLES

L'invention est illustrée par les exemples suivants qui ne présentent, en aucun cas, un caractère limitatif.

**Exemple 1:** préparation du dihydroxyde de 1,6-bis(méthylpiperidinium)hexane (structurant organique MPC6).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).

Le produit possède le spectre RMN $^1$H attendu. RMN $^1$H ($D_2O$, ppm/TMS) : 1,27(4H,m) ; 1,48 (4H,m) ; 1,61 (4H,m) ; 1,70 (8H,m) ; 2,85 (6H,s) ; 3,16 (12H,m).

18,9 g d'$Ag_2O$ (0,08 mole, 99%, Aldrich) sont ajoutés dans un bécher en téflon de 250 mL contenant 30 g du structurant dibromure de 1,6-bis(méthylpiperidinium)hexane (0,07 mol) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane (MPC6). Le dosage de cette espèce est réalisé par RMN du proton en utilisant l'acide formique en tant qu'étalon.

**Exemple 2:** préparation d'un catalyseur zéolithique AFX-BEA contenant du palladium selon l'invention

275,3 g d'une solution aqueuse de dihydroxyde de 1,6-bis(méthylpiperidinium)hexane (18,36% en poids) préparé selon l'exemple 1 sont mélangés avec 390,61 g d'eau permutée, sous agitation et à température ambiante. 7,18 g d'hydroxyde de sodium (98% en poids, Aldrich) sont dissous dans le mélange précédent sous agitation et à température ambiante. Par la suite, 6,32 g de gel amorphe d'hydroxyde d'aluminium (Al(OH)$_3$ gel amorphe, 58,55% en masse de Al$_2$O$_3$, Merck), sont incorporés dans le mélange de synthèse, celui-ci est maintenu sous agitation pendant une demi-heure à température ambiante. Dès que la suspension obtenue est homogène on commence à verser 70,9 g d'une zéolithe de type structural FAU (CBV780, SiO$_2$/Al$_2$O$_3$ = 90,54, Zeolyst, PAF = 8,52%) et on maintient sous agitation la suspension obtenue pendant 30 minutes à température ambiante. Ensuite, 5,73 g de germes (8,36% par rapport à la masse totale des sources de SiO$_2$ et d'Al$_2$O$_3$ sous forme anhydre présentes dans ledit mélange) d'une zéolithe de type structural AFX calcinée sont ajoutés dans le mélange de synthèse qui est maintenu sous agitation pendant 30 minutes. La composition molaire du gel précurseur est la suivante: 1 SiO$_2$: 0,05 Al$_2$O$_3$: 0,167 MPC6: 0,093 Na$_2$O: 36,73 H$_2$O, soit un ratio SiO$_2$/Al$_2$O$_3$ de 20. Le gel précurseur est ensuite transféré, après homogénéisation, dans un réacteur en inox de 1000 mL doté d'un système d'agitation à quatre pales inclinées. Le réacteur est fermé, puis chauffé pendant 18 heures avec une montée en température de 3°C/min jusqu'à 180°C sous agitation à 200 tr/min pour permettre la cristallisation d'un mélange d'une zéolithe de type structural AFX et d'une zéolithe de type structural BEA. Le produit cristallisé obtenu est filtré, lavé à l'eau déionisée, puis séché 12 heures à 100°C. La perte au feu du solide séché est de 16,38%. Le solide est ensuite introduit dans un four à moufle où est réalisée une étape de calcination: le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 12 heures puis un retour à la température ambiante.

Apres calcination, 40,0 g de ce mélange des zéolithes ont été échangés 3 fois avec une solution aqueuse 3M de NH$_4$NO$_3$ à 80 °C pendant 1 heure sous agitation (300 tr/min) et un rapport volume de solution sur masse de zéolithe égal à 10 (V/P). Ensuite, le solide a été filtré et séché pendant une nuit à 100°C. Il porte le nom : NH$_4$-AFX-BEA1.

0,25 g Pd(NH$_3$)$_4$Cl$_2$ hydratée est dilué dans 12 ml d'eau deminéralisée puis imprégnée à 25°C (par la méthode d'imprégnation à sec) sur 10 g du solide NH$_4$-AFX-BEA1 préparé ci-dessus.

Le catalyseur Pd-NH$_4$-AFX-BEA1 obtenu est séché sous air pendant 2 h à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd/AFX-BEA1 ainsi préparé comprend 1% en poids de palladium par rapport au poids total de catalyseur. La dispersion métallique du Pd obtenue par chimisorption CO est de 60%.

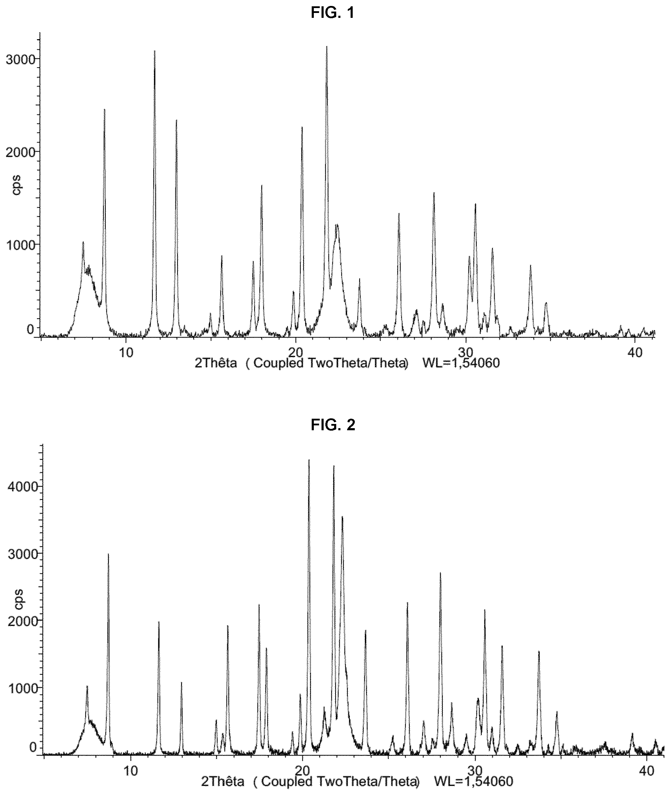

Le catalyseur Pd/AFX-BEA1 a été analysé par diffraction des rayons X et identifié comme étant un matériau composite zéolithique constitué par un mélange d'environ 78% massique d'une zéolithe de type structural AFX et 22% massique d'une zéolithe de type structural BEA ce qui donne un rapport massique AFX/BEA de 3,55. Le diagramme de diffraction de rayons X effectué sur le catalyseur Pd/AFX-BEA1 est donné sur la Figure 1. Le produit a un rapport molaire SiO$_2$/Al$_2$O$_3$ de 16,64 tel que déterminé par FX.

**Exemple 3:** préparation d'un catalyseur contenant une zéolithe de type structural AFX-BEA avec du palladium selon l'invention

23,9 g d'une zéolithe de type structural FAU (CBV712 Zeolyst, SiO$_2$/Al$_2$O$_3$= 11,42, PAF = 12,81%) ont été mélangés avec 495,2 g d'eau déionisée. 57,3 g d'une zéolithe de type structural FAU (CBV780 Zeolyst, SiO$_2$/Al$_2$O$_3$= 98,22, PAF = 8,52%) sont ajoutés au mélange précédent, la préparation obtenue est maintenue sous agitation pendant 10 minutes. 290,5 g d'une solution aqueuse de dihydroxyde de 1,6-bis(méthylpiperidinium)hexane (20,91% en poids) préparé selon l'exemple 1, sont ajoutés au mélange précédent. Le mélange est alors maintenu sous agitation pendant 10 minutes. 33,0 g d'une solution aqueuse à 20% en poids d'hydroxyde de sodium (solution préparée à partir d'hydroxyde de sodium à 98% en poids, Aldrich) sont ajoutés dans le mélange et maintenu sous agitation pendant 10 minutes. La composition molaire du gel précurseur est la suivante: 1 SiO$_2$: 0,03 Al$_2$O$_3$: 0,167 MPC6: 0,072 Na$_2$O: 36,73 H$_2$O, soit un ratio SiO$_2$/Al$_2$O$_3$ de 33,3. Le gel précurseur est ensuite transféré, après homogénéisation dans un autoclave. L'autoclave est fermé puis chauffé pendant 6 jours à 180°C sous agitation à 35 tr/min avec un système tourne-broche. Le produit cristallisé obtenu est filtré, lavé à l'eau déionisée puis séché une nuit à 100°C.

Le solide est ensuite introduit dans un four à moufle où est réalisée une étape de calcination sous flux d'air: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 8 heures puis un retour à la température ambiante.

Apres calcination, 40,0 g de ce mélange des zéolithes ont été échangés 3 fois avec une solution aqueuse 3M de NH$_4$NO$_3$ à 80 °C pendant 1 heure sous agitation (300 tr/min) et un rapport volume de solution sur masse de zéolithe égal à 10 (V/P). Ensuite, le solide a été filtre et séché pendant une nuit à 100°C. Il porte le nom : NH$_4$-AFX-BEA2.

0,25 g Pd(NH$_3$)$_4$Cl$_2$ hydratée est dilué dans 13 ml d'eau deminéralisée puis imprégnée à 25°C (par la méthode d'imprégnation à sec) sur 10 g de la zéolithe NH$_4$-AFX-BEA2 préparée ci-dessus.

Le catalyseur Pd-NH$_4$-AFX-BEA2 obtenu est séché sous air pendant 2 h à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd/AFX-BEA2 ainsi préparé comprend 1% en poids de palladium par rapport au poids total de catalyseur. La dispersion métallique du Pd obtenue par chimisorption CO est de 58%.

Le catalyseur Pd/AFX-BEA2 a été analysé par diffraction des rayons X et identifié comme étant un matériau composite zéolithique constitué par un mélange d'environ 50% massique d'une zéolithe de type structural AFX et 50% massique d'une zéolithe de type structural BEA ce qui donne un rapport massique AFX/BEA de 1. Le diagramme de diffraction de rayons X effectué sur le catalyseur Pd/AFX-BEA2 est donné sur la **Figure 2.**

**Exemple 4 (Comparatif)** : préparation d'un catalyseur contenant une zéolithe de type structural BEA avec du Pd

La zéolithe commerciale NH$_4$-BEA (CP814E, SiO$_2$/Al$_2$O$_3$ = 25,16, Zeolyst), a été utilisée comme support pour l'imprégnation du précurseur de palladium.

0,25 g Pd(NH$_3$)$_4$Cl$_2$ hydratée est dilué dans 17 ml d'eau deminéralisée puis imprégnée à 25°C (par la méthode d'imprégnation à sec) sur 10 g de la zéolithe NH$_4$-BEA (CP814E, SiO$_2$/Al$_2$O$_3$ = 25,16, Zeolyst).

Le solide obtenu est séché sous air pendant 2 h à 120°C. Le catalyseur Pd-NH$_4$-BEA obtenu est séché sous air à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

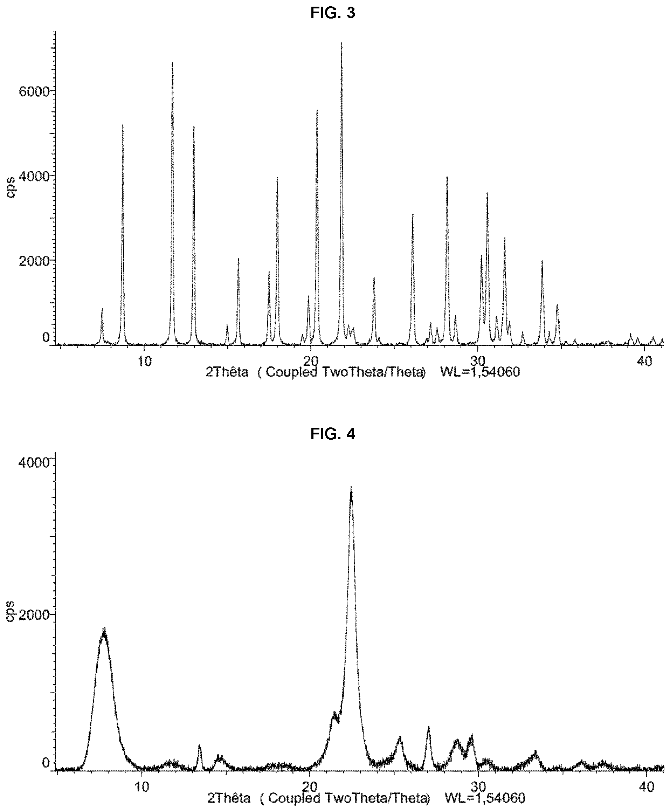

Le catalyseur Pd/BEA ainsi préparé comprend 1% en poids de palladium par rapport au poids total de catalyseur. La dispersion métallique du Pd obtenue par chimisorption CO est de 28%. Le diagramme de diffraction de rayons X effectué sur le catalyseur Pd/BEA est donné sur la Figure 4.

**Exemple 5 (Comparatif)** : préparation d'un catalyseur contenant un mélange mécanique de zéolithes de type structural AFX et BEA (78/22) avec du palladium

*1°) préparation d'un catalyseur contenant une zéolithe de type structural AFX avec du palladium*

275,8 g d'une solution aqueuse de dihydroxyde de 1,6-bis(méthylpiperidinium)hexane (18,36% en poids) préparé selon l'exemple 1 sont mélangés avec 391,23 g d'eau permutée, sous agitation et à température ambiante. 7,18 g d'hydroxyde de sodium (98% en poids, Aldrich) sont dissous dans le mélange précédent sous agitation et à température ambiante. Par la suite, 6,33 g de gel amorphe d'hydroxyde d'aluminium (Al(OH)$_3$ gel amorphe, 58,55% en masse de Al$_2$O$_3$, Merck), sont incorporés dans le mélange de synthèse, celui-ci est maintenu sous agitation pendant une demi-heure à température ambiante. Dès que la suspension obtenue est homogène on commence à verser 70,88 g d'une zéolithe de type structural FAU (CBV780, SiO$_2$/Al$_2$O$_3$ = 90,54, Zeolyst, PAF = 8,52%) et on maintient sous agitation la suspension obtenue pendant 30 minutes à température ambiante. Afin de favoriser la formation d'une zéolithe de type structural AFX, 6,14 g de germes (8,7% par rapport à la masse de zéolithe CBV780) d'une zéolithe de type structural AFX calcinée sont ajoutés dans le mélange de synthèse qui est maintenu sous agitation pendant 5 minutes. Ensuite, le mélange réactionnel subit une étape de mûrissement pendant 24 heures à température ambiante sous agitation (200 tr/min). La composition molaire du gel précurseur est la suivante: 1 SiO$_2$: 0,05 Al$_2$O$_3$: 0,167 R: 0,093 Na$_2$O: 36,73 H$_2$O, soit un ratio SiO$_2$/Al$_2$O$_3$ de 20. Le gel précurseur est ensuite transféré, après homogénéisation, dans un réacteur en inox de 1000 mL doté d'un système d'agitation à quatre pales inclinées. Le réacteur est fermé, puis chauffé pendant 14 heures avec une montée en température de 5°C/min jusqu'à 180°C sous agitation à 200 tr/min pour permettre la cristallisation de la zéolithe de type structural AFX. Le produit cristallisé obtenu est filtré, lavé à l'eau déionisée, puis séché une nuit à 100°C. Le solide est ensuite introduit dans un four à moufle où est réalisée une étape de calcination: le cycle de calcination comprend une montée en température de 1,5°C/min jusqu'à 200°C, un palier à 200°C maintenu durant 2 heures, une montée de 1°C/min jusqu'à 550°C suivi d'un palier à 550°C maintenu durant 12 heures puis un retour à la température ambiante.

Apres calcination, 40,0 g de cette zéolithe ont été échangés 3 fois avec une solution aqueuse 3M de NH$_4$NO$_3$ à 80°C pendant 1 heure sous agitation (300 tr/min) et un rapport volume de solution sur masse de zéolithe égal à 10 (V/P). Ensuite, le solide NH$_4$-AFX a été filtré et séché pendant une nuit à 100°C.

0,25 g Pd(N H$_3$)$_4$Cl$_2$ hydratée est dilué dans 8,2 ml d'eau deminéralisée puis imprégnée à 25°C (par la méthode d'imprégnation à sec) sur 10 g de la zéolithe NH$_4$-AFX préparée ci-dessus.

Le catalyseur Pd-NH$_4$-AFX obtenu est séché sous air pendant 2 h à 120°C, puis est calciné pendant 2 heures à 550°C sous un flux d'air de combustion avec une VVH de 3000 litres d'air de combustion par litre de catalyseur et par heure. L'air de combustion contient environ 60 g d'eau par kg d'air sec.

Le catalyseur Pd/AFX ainsi préparé comprend 1% en poids de palladium par rapport au poids total de catalyseur. La dispersion métallique du Pd obtenue par chimisorption CO est de 55%.

Le catalyseur Pd/AFX a été analysé par diffraction de rayons X et identifié comme étant constitué d'une zéolithe de type structural AFX avec une pureté supérieure à 99% poids. Le diagramme de diffraction de rayons X effectué sur le solide calciné est donné sur la **Figure 3.** Le produit a un rapport molaire SiO$_2$/Al$_2$O$_3$ de 14,46 tel que déterminé par FX.

*2°) préparation d'un catalyseur Pd AFX-BEA obtenu par mélange mécanique (comparatif)*

156 mg de la zéolithe de type structural AFX au palladium telle que préparée et 44 mg d'une zéolithe de type structural BEA au Palladium préparée selon l'exemple 4 sont mélangés (soit un rapport massique AFX/BEA de 3,55). Le matériau obtenu est nommé Pd/AFX-BEA-meca1.

Le catalyseur Pd/AFX-BEA-meca1 ainsi préparé comprend 1% en poids de palladium par rapport au poids total de catalyseur. La dispersion métallique du Pd obtenue par chimisorption CO est de 50%.

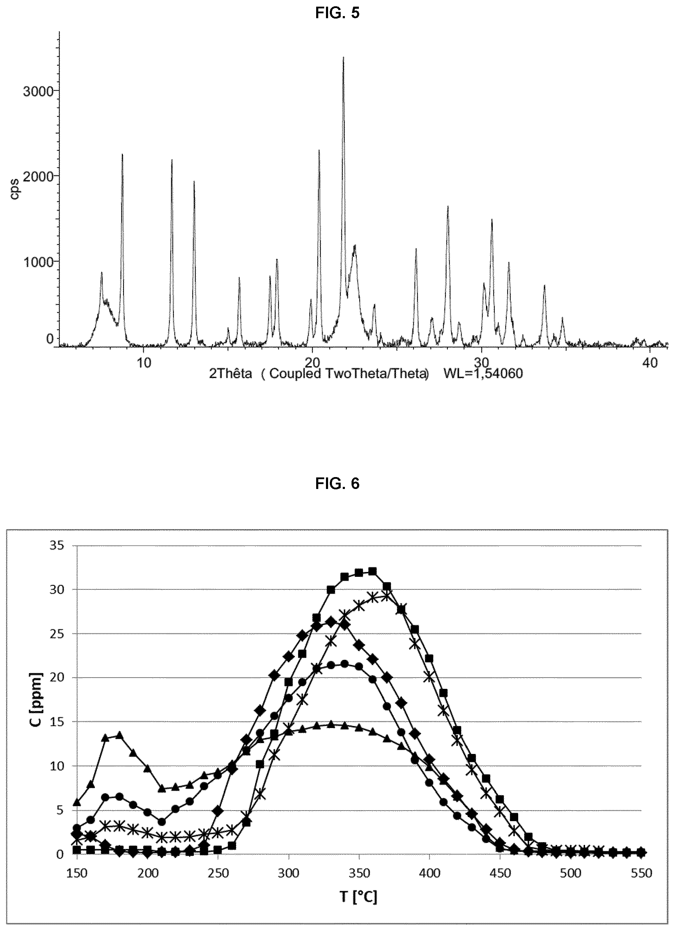

Le catalyseur Pd/AFX-BEA-meca1 a été analysé par diffraction des rayons X et identifié comme étant un matériau composite zéolithique constitué par un mélange d'environ 78% massique d'une zéolithe de type structural AFX et 22% massique d'une zéolithe de type structural BEA ce qui donne un rapport massique AFX/BEA de 1. Le diagramme de diffraction de rayons X effectué sur le catalyseur Pd/AFX-BEA-meca1 est donné sur la **Figure 5.**

**Exemple 6 (Comparatif)** : préparation d'un catalyseur contenant un mélange mécanique de zéolithes de type structural AFX et BEA (50/50) avec du palladium

100 mg d'une zéolithe de type structural AFX au palladium préparée selon l'exemple 5 et 100 mg d'une zéolithe de type structural BEA au Palladium préparée selon l'exemple 4 sont mélangés (soit un rapport massique AFX/BEA de 1). Le matériau obtenu est nommé Pd/AFX-BEA-meca2.

Le catalyseur Pd/AFX-BEA-meca2 ainsi préparé comprend 1% en poids de palladium par rapport au poids total de catalyseur. La dispersion métallique du Pd obtenue par chimisorption CO est de 48%.

**Exemple 7** : Etape de vieillissement hydrothermal

550 mg de chacun des échantillons synthétisés selon l'exemple 2 (Pd/AFX-BEA1), l'exemple 3 (Pd/AFX-BEA2), l'exemple 4 (Pd/BEA), l'exemple 5 (Pd/AFX-BEA-meca1) et l'exemple 6 (Pd/AFX-BEA-meca2) sont placés sous forme de poudre dans un réacteur en quartz. Ils sont traversés par un débit de 150 L/h d'un mélange de composition molaire suivante : 10% H$_2$O, 20% O$_2$ et N$_2$ en complément.

Les échantillons sont soumis à ces conditions pendant 4h à une température de 750°C. Ils sont ensuite refroidis à température ambiante sous flux de N$_2$.

L'échantillon synthétisé selon l'exemple 2 et vieilli sous les conditions de l'exemple 7 est nommé Pd/AFX-BEA1-vieilli.

L'échantillon synthétisé selon l'exemple 3 et vieilli sous les conditions de l'exemple 7 est nommé Pd/AFX-BEA2-vieilli.

L'échantillon synthétisé selon l'exemple 4 et vieilli sous les conditions de l'exemple 7 est nommé Pd/BEA-vieilli.

L'échantillon synthétisé selon l'exemple 5 et vieilli sous les conditions de l'exemple 7 est nommé Pd/AFX-BEA-meca1-vieilli.

L'échantillon synthétisé selon l'exemple 6 et vieilli sous les conditions de l'exemple 7 est nommé Pd/AFX-BEA-meca2-vieilli.

**Exemple 8** : tests d'adsorption et désorption de NO$_x$

Pour mettre en évidence les capacités d'adsorption, un test d'adsorption de NOx à 120°C suivi d'une rampe de température de 120°C à 600°C à 10°C/min est réalisé avec les catalyseurs synthétisés suivant l'exemple 2 (Pd/AFX-BEA1, selon l'invention), l'exemple 3 (Pd/AFX-BEA2, selon l'invention), l'exemple 4 (Pd/BEA), l'exemple 5 (Pd/AFX-BEA-meca1) et l'exemple 6 (Pd/AFX-BEA-meca2). Pour le test de chaque échantillon, 523 mg de catalyseur sous forme de poudre sont disposés dans un réacteur en quartz.

- Un préconditionnement est réalisé, il consiste en une montée en température depuis l'ambiant (20°C) jusqu'à 550°C avec une rampe de 10°C/min sous un mélange composé de 10% O$_2$, 5% CO$_2$, 10% H$_2$O et N$_2$ en complément. La

descente en température se fait sous même mélange jusqu'à 120°C.

- L'adsorption est réalisée à 120°C sous mélange suivant : 200 ppm NO + 300 ppm CO + 5% $CO_2$+ 10% $H_2O$ et $N_2$ en complément. La durée de cette phase d'adsorption est de 10 min.
- Pour désorber les NOx adsorbés, l'échantillon subit une montée en température jusqu'à 550°C suivant une rampe de 10°C/min sous mélange 10% $CO_2$ + 10% $H_2O$ et $N_2$ en complément

Un analyseur FTIR permet de mesurer la concentration des espèces NO, $NO_2$, $NH_3$, $N_2O$, CO, $CO_2$, $H_2O$, $O_2$ en sortie de réacteur.

La figure 6 présente les concentrations en NOx désorbées pendant la rampe de température. La courbe marquée par des carrés, celle marquée par des losanges, celle marquée par des triangles, celle marquée par des croix et celle marquée par des ronds correspondent respectivement aux tests réalisés avec les catalyseurs synthétisés suivant l'exemple 2 (Pd/AFX-BEA1, selon l'invention), l'exemple 3 (Pd/AFX-BEA2, selon l'invention), l'exemple 4 (Pd/BEA), l'exemple 5 (Pd/AFX-BEA-meca1) et l'exemple 6 (Pd/AFX-BEA-meca2). Les quantités de NOx désorbées par masse de catalyseur pendant la rampe de température ainsi que la température du maximum de désorption sont données ci-dessous :

Table 2

|  | NOx [$\mu$mol/gcat] | Temp. [°C] |
|---|---|---|
| Pd/AFX-BEA1 | 79,6 | 360 |
| Pd/AFX-BEA2 | 68,2 | 335 |
| Pd/BEA | 63,9 | 333 |
| Pd/AFX-BEA-meca1 | 76,4 | 370 |
| Pd/AFX-BEA-meca2 | 66,6 | 340 |

Les catalyseurs Pd/AFX-BEA1 et Pd/AFX-BEA2 synthétisés selon l'invention donnent des performances d'adsorption supérieures aux catalyseurs Pd/BEA, Pd/AFX-BEA-meca1 et Pd/AFX-BEA-meca2 en termes de quantité adsorbée. Contrairement aux catalyseurs Pd/BEA, Pd/AFX-BEA-meca1 et Pd/AFX-BEA-meca2 qui présentent une désorption de NOx dès 150°C, la désorption des NOx n'apparait que vers 250°C pour les catalyseurs Pd/AFX-BEA1 et Pd/AFX-BEA2 selon invention. Ces désorptions de NOx supérieures à 250°C présentent un avantage notable pour le contrôle des émissions de NOx.

**Exemple 10** : tests d'adsorption et désorption de NOx après vieillissement hydrothermal

Un test d'adsorption de NOx à 120°C suivi d'une rampe de température à 10°C/min jusqu'à 600°C est réalisé avec les catalyseurs vieillis selon l'exemple 7 : Pd/AFX-BEA1-vieilli, Pd/AFX-BEA2-vieilli, Pd/BEA-vieilli, Pd/AFX-BEA-meca1-vieilli et Pd/AFX-BEA-meca2-vieilli.

Pour le test de chaque échantillon, 523 mg de catalyseur sous forme de poudre sont disposés dans un réacteur en quartz.

- Un préconditionnement est réalisé, il consiste en une montée en température depuis l'ambiant (20°C) jusqu'à 550°C avec une rampe de 10°C/min sous un mélange composé de 10% $O_2$, 5% $CO_2$, 10% $H_2O$ et $N_2$ en complément. La descente en température se fait sous même mélange jusqu'à 120°C.
- L'adsorption est réalisée à 120°C sous mélange suivant : 200 ppm NO + 300 ppm CO + 5% $CO_2$+ 10% $H_2O$ et $N_2$ en complément. La durée de cette phase d'adsorption est de 10 min.
- Pour désorber les NOx adsorbés, l'échantillon subit une montée en température jusqu'à 550°C suivant une rampe de 10°C/min sous mélange 10% $CO_2$ + 10% $H_2O$ et $N_2$ en complément

Un analyseur FTIR permet de mesurer la concentration des espèces NO, $NO_2$, $NH_3$, $N_2O$, CO, $CO_2$, $H_2O$, $O_2$ en sortie de réacteur

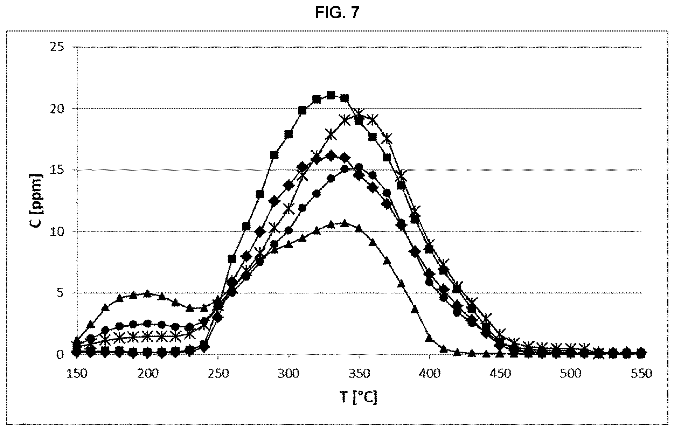

La figure 7 présente les concentrations en NOx désorbées pendant la rampe de température. La courbe marquée par des carrés, celle marquée par des losanges, celle marquée par des triangles, celle marquée par des croix et celle marquée par des ronds correspondent respectivement aux tests réalisés avec les catalyseurs Pd/AFX-BEA1-vieilli, Pd/AFX-BEA2-vieilli, Pd/BEA-vieilli, Pd/AFX-BEA-meca1-vieilli et Pd/AFX-BEA-meca2-vieilli. Les quantités de NOx désorbées par masse de catalyseur pendant la rampe de température ainsi que la température du maximum de désorption sont données ci-dessous :

Table 3

| | NOx [$\mu$mol/gcat] | Temp. [°C] |
|---|---|---|
| Pd/AFX-BEA1-vieilli | 68,4 | 330 |
| Pd/AFX-BEA2-vieilli | 62,4 | 335 |
| Pd/BEA-vieilli | 40,9 | 340 |
| Pd/AFX-BEA-meca1-vieilli | 62,5 | 350 |
| Pd/AFX-BEA-meca2-vieilli | 51,1 | 348 |

Les catalyseurs Pd/AFX-BEA1-vieilli et Pd/AFX-BEA2-vieilli synthétisés selon l'invention donnent des performances d'adsorption supérieures aux catalyseurs Pd/BEA-vieilli, et aux catalyseurs réalisés par mélange mécanique Pd/AFX-BEA-meca1-vieilli et Pd/AFX-BEA-meca2-vieilli synthétisés selon l'art antérieur en termes de quantité adsorbée. Les catalyseurs Pd/BEA-vieilli, Pd/AFX-BEA-meca1-vieilli et Pd/AFX-BEA-meca2-vieilli présentent une désorption de $NO_x$ dès 150°C, pour les catalyseurs Pd/AFX-BEA1-vieilli et Pd/AFX-BEA2-vieilli selon invention la désorption des NOx n'apparaît que vers 250°C.

**Revendications**

1. Procédé de préparation d'un catalyseur composite zéolithique comprenant un mélange de zéolithes de type structural AFX et de type structural BEA et du palladium, comprenant au moins les étapes suivantes :

   i) le mélange en milieu aqueux, d'une zéolithe ou d'un mélange de zéolithes de type structural FAU ayant un ratio molaire total $SiO_{2\ (FAU)}/Al_2O_{3\ (FAU)}$ compris entre 20 et 60, bornes incluses, d'un composé organique azoté MPC6, MPC6 étant le dihydroxyde de 1,6-bis(méthylpiperidinium)hexane, d'au moins une source de cations sodium, le mélange réactionnel présentant la composition molaire suivante :

   $(SiO_{2\ (FAU)})/(Al_2O_{3\ (FAU)})$ compris entre 20 et 60,
   $H_2O/(SiO_{2\ (FAU)})$ compris entre 5 et 60,
   $MPC6/(SiO_{2\ (FAU)})$ compris entre 0,10 et 0,50,
   $Na_2O/(SiO_{2\ (FAU)})$ compris entre 0,05 et 0,11, bornes incluses,
   $SiO_{2\ (FAU)}$ désigne la quantité de $SiO_2$ apportée par la(les) zéolithe(s) FAU, et $Al_2O_{3\ (FAU)}$ désigne la quantité de $Al_2O_3$ apportée par la(les) zéolithe(s) FAU, jusqu'à l'obtention d'un gel précurseur homogène;

   ii) le traitement hydrothermal dudit gel précurseur obtenu à l'issue de l'étape i) à une température comprise entre 160°C et 220°C, pendant une durée comprise entre 12 et 150 heures pour obtenir un matériau composite zéolithique AFX-BEA

   iii) une étape de filtration, lavage et séchage du matériau composite zéolithique AFX-BEA obtenu à l'issue de l'étape ii), ledit séchage étant réalisé à une température comprise entre 60 et 120°C, pendant une durée comprise entre 5 et 24 heures pour obtenir un matériau composite zéolithique AFX-BEA séché, suivie d'une calcination dudit matériau composite zéolithique AFX-BEA séché à une température comprise entre 500 et 700°C pendant une durée comprise entre 2 et 20 heures, la calcination pouvant être précédée d'une montée en température progressive, pour obtenir un matériau composite zéolithique AFX-BEA calciné ;

   iv) au moins une étape d'échange ionique du matériau composite zéolithique AFX-BEA calciné obtenu à l'étape iii) comprenant la mise en contact du matériau composite zéolithique AFX-BEA calciné obtenu à l'étape iii), avec une solution contenant des cations ammonium, de préférence du nitrate d'ammonium, sous agitation à une température comprise entre 20 et 95°C, de préférence entre 60 et 85°C pendant une durée comprise entre 1 heure et 2 jours pour obtenir un matériau calciné sous forme ammonium, qui est de nouveau séché à une température comprise entre 60 et 120°C ;

   v) dépôt d'une solution de palladium sur le matériau composite zéolithique AFX-BEA calciné sous forme ammonium et séché.

2. Procédé selon la revendication 1 dans lequel ladite solution de palladium est déposée à l'étape v) par imprégnation à sec ou par voie colloïdale.

3. Procédé selon l'une des revendications 1 ou 2 dans lequel le mélange réactionnel de l'étape i) peut comprendre au moins une source additionnelle d'aluminium sous forme oxyde notée :
$Al_2O_{3\,(C)}$, le mélange réactionnel de l'étape i) ayant la composition molaire suivante :

$SiO_{2\,(FAU)}/(Al_2O_{3\,(FAU)} + Al_2O_{3\,(C)})$ compris entre 20 et 60, bornes incluses
$H_2O/SiO_{2\,(FAU)}$ compris entre 5 et 60
$MPC6/SiO_{2\,(FAU)}$ compris entre 0,10 et 0,50
$Na_2O/SiO_{2\,(FAU)}$ compris entre 0,05 et 0,11, bornes incluses, $SiO_{2\,(FAU)}$ étant la quantité de $SiO_2$ apportée par la zéolithe FAU, $Al_2O_{3\,(FAU)}$ étant la quantité de $Al_2O_3$ apportée par la zéolithe FAU et $Al_2O_{3\,(C)}$ étant la quantité de $Al_2O_3$ apportée par la source additionnelle d'aluminium considéré sous sa forme oxyde, MPC6 étant le composé organique azoté 1,6-bis(méthylpiperidinium)hexane sous sa forme dihydroxyde.

4. Procédé selon la revendication 3 dans lequel ladite source d'aluminium additionnelle est choisie parmi l'hydroxyde d'aluminium ou un sel d'aluminium, un aluminate de sodium, un alkoxyde d'aluminium, ou de l'alumine pris seuls ou en mélange, de préférence ladite source d'aluminium conventionnelle est l'hydroxyde d'aluminium.

5. Procédé selon l'une des revendications précédentes dans lequel la source de cations sodium est l'hydroxyde de sodium.

6. Procédé selon l'une des revendications précédentes dans lequel on ajoute des germes cristallins d'une zéolithe de type structural AFX ou d'une zéolithe de type structural BEA ou d'un mélange des deux, au mélange réactionnel de l'étape i), en quantité comprise entre 0,01 et 10% poids par rapport à la masse totale des sources de $SiO_2$ et d'$Al_2O_3$ sous forme anhydre présentes dans ledit mélange, lesdits germes cristallins n'étant pas pris en compte dans la masse totale des sources de $SiO_2$ et d'$Al_2O_3$.

7. Procédé selon l'une des revendications précédentes dans lequel l'étape i) comprend une étape de mûrissement du mélange réactionnel à une température comprise entre 20 et 100°C, avec ou sans agitation, pendant une durée comprise entre 30 minutes et 48 heures.

8. Procédé selon l'une des revendications précédentes dans lequel la teneur en palladium introduite par l'étape de dépôt v) est comprise entre 0,5 à 5% massique, de préférence entre 0,8 et 3% massique, de manière plus préférée entre 0,9 et 2% massique, très avantageusement autour de 1% massique par rapport à la masse totale du catalyseur composite anhydre.

9. Catalyseur composite zéolithique AFX-BEA contenant du palladium obtenu par le procédé selon l'une des revendications 1 à 8.

10. Catalyseur composite zéolithique AFX-BEA selon la revendication 9 dont le rapport $SiO_2/Al_2O_3$ est compris entre 6 et 80, bornes incluses, de préférence entre 10 et 40, bornes incluses.

11. Catalyseur composite zéolithique AFX-BEA selon la revendication 9 ou 10 dans lequel le rapport massique entre les quantités de zéolithes de type structural AFX et de type BEA est compris entre 0,9 et 5,7.

12. Catalyseur composite zéolithique AFX-BEA selon l'une des revendications 9 à 11 dans lequel la teneur en palladium est comprise entre 0,5 à 5% massique, de préférence entre 0,8 et 3% massique, de manière plus préférée entre 0,9 et 2% massique, très avantageusement autour de 1% massique par rapport à la masse totale du catalyseur final anhydre et la dispersion métallique du palladium mesurée par chimisorption de CO est comprise entre 40 et 100%, de préférence entre 50 et 100%.

13. Utilisation du catalyseur selon l'une quelconque des revendications 9 à 12 ou obtenu par le procédé selon l'une quelconque des revendications 1 à 8, pour la réduction sélective de $NO_x$ par un réducteur tel que $NH_3$ ou $H_2$.

14. Utilisation selon la revendication 13, pour laquelle le catalyseur est mis en forme par dépôt sous forme de revêtement sur une structure nid d'abeilles ou une structure à plaques.

15. Utilisation selon la revendication 14, pour laquelle la structure nid d'abeilles est formée de canaux parallèles ouverts aux deux extrémités ou comporte des parois poreuses filtrantes pour lesquelles les canaux parallèles adjacents sont alternativement bouchés de part et d'autre des canaux.

16. Utilisation selon la revendication 15, pour laquelle la quantité de catalyseur déposé sur ladite structure est comprise entre 50 à 240 g/L pour les structures filtrantes et entre 50 et 320 g/L pour les structures avec canaux ouverts.

17. Utilisation selon l'une des revendications 14 à 16, pour laquelle le catalyseur est associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

18. Utilisation selon l'une des revendications 14 à 17, pour laquelle ledit revêtement est associé à un autre revêtement présentant des capacités d'adsorption de polluants en particulier de NOx, de réduction de polluants en particulier des NOx ou favorisant l'oxydation de polluants.

19. Utilisation selon la revendication 13, pour laquelle ledit catalyseur est sous forme d'extrudé, contenant jusqu'à 100% dudit catalyseur.

20. Utilisation selon l'une des revendications 13 à 19, pour laquelle la structure revêtue par ledit catalyseur ou obtenue par extrusion dudit catalyseur est intégrée dans une ligne d'échappement d'un moteur à combustion interne.

**Patentansprüche**

1. Verfahren zur Herstellung eines Zeolith-Verbundkatalysators, der eine Mischung von Zeolithen vom Strukturtyp AFX und vom Strukturtyp BEA und Palladium umfasst, das mindestens die folgenden Schritte umfasst:

   i) Mischen eines Zeoliths oder einer Mischung von Zeolithen vom FAU-Strukturtyp mit einem Gesamtmolverhältnis $SiO_{2(FAU)}/Al_2O_{3(FAU)}$ zwischen 20 und 60, Grenzen eingeschlossen, einer organischen Stickstoffverbindung MPC6, wobei es sich bei MPC6 um 1,6-Bis(methylpiperidinium)hexandihydroxid handelt, und mindestens einer Quelle von Natriumkationen in wässrigem Medium, wobei die Reaktionsmischung die folgende molare Zusammensetzung aufweist:

   $(SiO_{2(FAU)})/(Al_2O_{3(FAU)})$ zwischen 20 und 60,
   $H_2O/(SiO_{2(FAU)})$ zwischen 5 und 60,
   $MPC6/(SiO_{2(FAU)})$ zwischen 0,10 und 0,50,
   $Na_2O/(SiO_{2(FAU)})$ zwischen 0,05 und 0,11, Grenzen eingeschlossen,
   wobei $SiO_{2(FAU)}$ die von dem FAU-Zeolith bzw. den FAU-Zeolithen bereitgestellte Menge von $SiO_2$ bedeutet und $Al_2O_{3(FAU)}$ die von dem FAU-Zeolith bzw. den FAU-Zeolithen bereitgestellte Menge von $Al_2O_3$ bedeutet, bis zum Erhalt eines homogenen Vorläufergels;

   ii) hydrothermale Behandlung des am Ende von Schritt i) erhaltenen Vorläufergels bei einer Temperatur zwischen 160 °C und 220 °C über einen Zeitraum zwischen 12 und 150 Stunden zum Erhalt eines AFX-BEA-Zeolith-Verbundmaterials;
   iii) einen Schritt des Filtrierens, des Waschens und des Trocknens des am Ende von Schritt ii) erhaltenen AFX-BEA-Zeolith-Verbundmaterials, wobei das Trocknen bei einer Temperatur zwischen 60 und 120 °C über einen Zeitraum zwischen 5 und 24 Stunden erfolgt, zum Erhalt eines getrockneten AFX-BEA-Zeolith-Verbundmaterials, gefolgt von einer Calcinierung des getrockneten AFX-BEA-Zeolith-Verbundmaterials bei einer Temperatur zwischen 500 und 700 °C über einen Zeitraum zwischen 2 und 20 Stunden, wobei der Calcinierung eine allmähliche Temperatursteigerung vorgeschaltet sein kann, zum Erhalt eines calcinierten AFX-BEA-Zeolith-Verbundmaterials;
   iv) mindestens einen Schritt des Ionenaustauschs des in Schritt iii) erhaltenen calcinierten AFX-BEA-Zeolith-Verbundmaterials, umfassend das Inkontaktbringen des in Schritt iii) erhaltenen calcinierten AFX-BEA-Zeolith-Verbundmaterials mit einer Lösung, die Ammoniumkationen, vorzugsweise Ammoniumnitrat, enthält, unter Rühren bei einer Temperatur zwischen 20 und 95 °C, vorzugsweise zwischen 60 und 85 °C, über einen Zeitraum zwischen 1 Stunde und 2 Tagen zum Erhalt eines calcinierten Materials in Ammoniumform, das erneut bei einer Temperatur zwischen 60 und 120 °C getrocknet wird;
   v) Abscheiden einer Palladiumlösung auf dem in Ammoniumform calcinierten und getrockneten AFX-BEA-Zeolith-Verbundmaterial.

2. Verfahren nach Anspruch 1, wobei die Palladiumlösung in Schritt v) durch Trockenimprägnierung oder auf kolloidalem Wege abgeschieden wird.

3. Verfahren nach Anspruch 1 oder Anspruch 2, wobei die Reaktionsmischung von Schritt i) mindestens eine zusätzliche Quelle von Aluminium in Oxidform, die als $Al_2O_{3(C)}$ bezeichnet wird, umfassen kann, wobei die Reaktionsmischung von Schritt i) die folgende molare Zusammensetzung aufweist:

$SiO_{2(FAU)}/(Al_2O_{3(FAU)} + Al_2O_{3(C)})$ zwischen 20 und 60, Grenzen eingeschlossen,
$H_2O/SiO_{2(FAU)}$ zwischen 5 und 60
$MPC6/SiO_{2(FAU)}$ zwischen 0,10 und 0,50
$Na_2O/SiO_{2(FAU)}$ zwischen 0,05 und 0,11, Grenzen eingeschlossen, wobei $SiO_{2(FAU)}$ die von dem FAU-Zeolith bereitgestellte Menge von $SiO_2$ ist; $Al_2O_{3\,(FAU)}$ die von dem FAU-Zeolith bereitgestellte Menge von $Al_2O_3$ ist und $Al_2O_{3(C)}$ die von der zusätzlichen Quelle von Aluminium, das in seiner Oxidform betrachtet wird, bereitgestellte Menge von $Al_2O_3$ ist, wobei es sich bei MPC6 um die organische Stickstoffverbindung 1,6-Bis(methylpiperidinium)hexan in ihrer Dihydroxidform handelt.

4. Verfahren nach Anspruch 3, wobei die zusätzliche Quelle von Aluminium aus Aluminiumhydroxid oder einem Aluminiumsalz, einem Natriumaluminat, einem Aluminiumalkoxid oder Aluminiumoxid allein oder in einer Mischung ausgewählt ist und es sich bei der herkömmlichen Quelle von Aluminium vorzugsweise um Aluminiumhydroxid handelt.

5. Verfahren nach einem der vorhergehenden Ansprüche, wobei es sich bei der Quelle von Natriumkationen um Natriumhydroxid handelt.

6. Verfahren nach einem der vorhergehenden Ansprüche, bei dem man Kristallkeime eines Zeoliths vom AFX-Strukturtyp oder eines Zeoliths vom BEA-Strukturtyp oder eine Mischung der beiden in einer Menge zwischen 0,01 und 10 Gew.-%, bezogen auf die Gesamtmasse der Quellen von $SiO_2$ und $Al_2O_3$ in wasserfreier Form, die in der Mischung vorliegen, zu der Reaktionsmischung von Schritt i) gibt, wobei die Kristallkeime in der Gesamtmasse der Quellen von $SiO_2$ und $Al_2O_3$ nicht berücksichtigt werden.

7. Verfahren nach einem der vorhergehenden Ansprüche, wobei der Schritt i) einen Schritt der Reifung der Reaktionsmischung bei einer Temperatur zwischen 20 und 100 °C mit oder ohne Rühren über einen Zeitraum zwischen 30 Minuten und 48 Stunden umfasst.

8. Verfahren nach einem der vorhergehenden Ansprüche, wobei der Gehalt an Palladium, das durch den Aufbringungsschritt v) eingeführt wird, zwischen 0,5 und 5 Massen-%, vorzugsweise zwischen 0,8 und 3 Massen-%, weiter bevorzugt zwischen 0,9 und 2 Massen-%, sehr vorteilhaft ungefähr 1 Massen-%, bezogen auf die Gesamtmasse des wasserfreien Katalysators, liegt.

9. Palladiumhaltiger AFX-BEA-Zeolith-Verbundkatalysator, erhalten durch das Verfahren nach einem der Ansprüche 1 bis 8.

10. AFX-BEA-Zeolith-Verbundkatalysator nach Anspruch 9, wobei das $SiO_2/Al_2O_3$-Verhältnis zwischen 6 und 80, Grenzen eingeschlossen, vorzugsweise zwischen 10 und 40, Grenzen eingeschlossen, liegt.

11. AFX-BEA-Zeolith-Verbundkatalysator nach Anspruch 9 oder 10, wobei das Massenverhältnis zwischen den Mengen an Zeolithen vom AFX-Strukturtyp und vom BEA-Typ zwischen 0,9 und 5,7 liegt.

12. AFX-BEA-Zeolith-Verbundkatalysator nach einem der Ansprüche 9 bis 11, wobei der Palladiumgehalt zwischen 0,5 und 5 Massen-%, vorzugsweise zwischen 0,8 und 3 Massen-%, weiter bevorzugt zwischen 0,9 und 2 Massen-%, sehr vorteilhaft ungefähr 1 Massen-%, bezogen auf die Gesamtmasse des fertigen wasserfreien Katalysators, liegt und die durch CO-Chemisorption gemessene Metalldispersion des Palladiums zwischen 40 und 100 %, vorzugsweise zwischen 50 und 100 %, liegt.

13. Verwendung des Katalysators nach einem der Ansprüche 9 bis 12 oder des durch das Verfahren nach einem der Ansprüche 1 bis 8 erhaltenen Katalysators zur selektiven Reduktion von $NO_x$ durch ein Reduktionsmittel wie $NH_3$ oder $H_2$.

14. Verwendung nach Anspruch 13, für die der Katalysator durch Abscheidung in Form einer Beschichtung auf einer Wabenstruktur oder einer Plattenstruktur geformt ist.

15. Verwendung nach Anspruch 14, für die die Wabenstruktur aus an beiden Seiten offenen parallelen Kanälen gebildet ist oder poröse filtrierende Wände aufweist, für die die benachbarten parallelen Kanäle auf beiden Seiten der Kanäle abwechselnd verstopft sind.

16. Verwendung nach Anspruch 15, für die die auf der Struktur abgeschiedene Katalysatormenge zwischen 50 und 240 g/l für die filtrierenden Strukturen und zwischen 80 und 320 g/l für die Strukturen mit offenen Kanälen liegt.

17. Verwendung nach einem der Ansprüche 14 bis 16, für die der Katalysator zum Formen durch Abscheidung in Form einer Beschichtung mit einem Bindemittel wie Ceroxid, Zirconiumoxid, Aluminiumoxid, nichtzeolithischem Siliciumdioxid-Aluminiumoxid, Titanoxid, einem Ceroxid-Zirconiumoxid-Mischoxid, einem Wolframoxid und/oder einem Spinell kombiniert ist.

18. Verwendung nach einem der Ansprüche 14 bis 17, für die die Beschichtung mit einer weiteren Beschichtung, die die Fähigkeiten besitzt, Schadstoffe, insbesondere NOx, zu adsorbieren, Schadstoffe, insbesondere NOx, zu reduzieren oder die Oxidation von Schadstoffen zu fördern.

19. Verwendung nach Anspruch 13, für die der Katalysator in Form eines Extrudats, das bis zu 100 % des Katalysators enthält, vorliegt.

20. Verwendung nach einem der Ansprüche 13 bis 19, für die die mit dem Katalysator beschichtete oder durch Extrusion des Katalysators erhaltene Struktur in eine Abgasleitung eines Verbrennungsmotors integriert ist.

**Claims**

1. Process for preparing a zeolite composite catalyst comprising a mixture of zeolites of AFX structural type and of BEA structural type and palladium, comprising at least the following steps:

    i) the mixing, in an aqueous medium, of a zeolite or a mixture of zeolites of FAU structural type having a total $SiO_{2\,(FAU)}/Al_2O_{3\,(FAU)}$ molar ratio of between 20 and 60, limits included, an organic nitrogenous compound MPC6, MPC6 being 1,6-bis(methylpiperidinium)hexane dihydroxide, at least one source of sodium cations, the reaction mixture having the following molar composition:

    $(SiO_{2\,(FAU)})/(Al_2O_{3\,(FAU)})$ of between 20 and 60,
    $H_2O/(SiO_{2\,(FAU)})$ of between 5 and 60,
    $M\,PC6/(SiO_{2\,(FAU)})$ of between 0.10 and 0.50,
    $Na_2O/(SiO_{2\,(FAU)})$ of between 0.05 and 0.11, limits included,
    $SiO_{2\,(FAU)}$ denotes the amount of $SiO_2$ provided by the FAU zeolite(s) and $Al_2O_{3\,(FAU)}$ denotes the amount of $Al_2O_3$ provided by the FAU zeolite(s), until a homogeneous precursor gel is obtained;

    ii) the hydrothermal treatment of said precursor gel obtained on conclusion of step i) at a temperature of between 160°C and 220°C, for a time of between 12 and 150 hours, in order to obtain an AFX-BEA zeolite composite material;
    iii) a step of filtration, washing and drying of the AFX-BEA zeolite composite material obtained on conclusion of step ii), said drying being carried out at a temperature of between 60 and 120°C, for a time of between 5 and 24 hours, in order to obtain a dried AFX-BEA zeolite composite material, followed by calcination of said dried AFX-BEA zeolite composite material at a temperature of between 500 and 700°C for a time of between 2 and 20 hours, the calcination possibly being preceded by a gradual increase in temperature, in order to obtain a calcined AFX-BEA zeolite composite material;
    iv) at least one step of ion exchange of the calcined AFX-BEA zeolite composite material obtained in step iii), comprising bringing the calcined AFX-BEA zeolite composite material obtained in step iii) into contact with a solution containing ammonium cations, preferably ammonium nitrate, with stirring at a temperature of between 20 and 95°C, preferably between 60 and 85°C, for a time of between 1 hour and 2 days, in order to obtain a calcined material in ammonium form, which is again dried at a temperature of between 60 and 120°C;
    v) deposition of a palladium solution on the ammonium-form calcined and dried AFX-BEA zeolite composite material.

2. Process according to Claim 1, wherein said palladium solution is deposited in step v) by dry impregnation or via a colloidal route.

3. Process according to either of Claims 1 and 2, wherein the reaction mixture of step i) may comprise at least one additional source of aluminum in oxide form, denoted:
   $Al_2O_{3\,(C)}$, the reaction mixture of step i) having the following molar composition:

   $SiO_{2\,(FAU)}/(Al_2O_{3\,(FAU)} + Al_2O_{3\,(C)})$ of between 20 and 60, limits included,
   $H_2O/SiO_{2\,(FAU)}$ of between 5 and 60,
   $MPC6/SiO_{2\,(FAU)}$ of between 0.10 and 0.50,
   $Na_2O/SiO_{2\,(FAU)}$ of between 0.05 and 0.11, limits included, $SiO_{2\,(FAU)}$ being the amount of $SiO_2$ provided by the FAU zeolite, $Al_2O_{3\,(FAU)}$ being the amount of $Al_2O_3$ provided by the FAU zeolite and $Al_2O_{3\,(C)}$ being the amount of $Al_2O_3$ provided by the additional source of aluminum considered in its oxide form, MPC6 being the organic nitrogenous compound 1,6-bis(methylpiperidinium)hexane in its dihydroxide form.

4. Process according to Claim 3, wherein said additional source of aluminum is selected from aluminum hydroxide or an aluminum salt, a sodium aluminate, an aluminum alkoxide, or alumina, taken alone or in a mixture, preferably said conventional source of aluminum is aluminum hydroxide.

5. Process according to one of the preceding claims, wherein the source of sodium cations is sodium hydroxide.

6. Process according to one of the preceding claims, wherein seed crystals of a zeolite of AFX structural type or of a zeolite of BEA structural type or of a mixture of the two are added to the reaction mixture of step i), in an amount of between 0.01% and 10% by weight relative to the total mass of the sources of $SiO_2$ and $Al_2O_3$ in anhydrous form present in said mixture, said seed crystals not being taken into account in the total mass of the sources of $SiO_2$ and $Al_2O_3$.

7. Process according to one of the preceding claims, wherein step i) comprises a step of maturing the reaction mixture at a temperature of between 20 and 100°C, with or without stirring, for a period of between 30 minutes and 48 hours.

8. Process according to one of the preceding claims, wherein the content of palladium introduced by the deposition step v) is between 0.5% to 5% by mass, preferably between 0.8% and 3% by mass, more preferably between 0.9% and 2% by mass, very advantageously around 1% by mass, relative to the total mass of the anhydrous composite catalyst.

9. AFX-BEA zeolite composite catalyst containing palladium, obtained by the process according to one of Claims 1 to 8.

10. AFX-BEA zeolite composite catalyst according to Claim 9, the $SiO_2/Al_2O_3$ ratio of which is between 6 and 80, limits included, preferably between 10 and 40, limits included.

11. AFX-BEA zeolite composite catalyst according to Claim 9 or 10, wherein the mass ratio between the amounts of zeolites of AFX structural type and of BEA type is between 0.9 and 5.7.

12. AFX-BEA zeolite composite catalyst according to one of Claims 9 to 11, wherein the palladium content is between 0.5% to 5% by mass, preferably between 0.8% and 3% by mass, more preferably between 0.9% and 2% by mass, very advantageously around 1% by mass, relative to the total mass of the anhydrous final catalyst, and the metallic dispersion of the palladium, measured by CO chemisorption, is between 40% and 100%, preferably between 50% and 100%.

13. Use of the catalyst according to any one of Claims 9 to 12 or obtained by the process according to any one of Claims 1 to 8, for the selective reduction of $NO_x$ by a reducing agent such as $NH_3$ or $H_2$.

14. Use according to Claim 13, for which the catalyst is formed by deposition in the form of a coating on a honeycomb structure or a plate structure.

15. Use according to Claim 14, for which the honeycomb structure is formed by parallel channels open at both ends or comprises porous filtering walls for which the adjacent parallel channels are alternately blocked at either end of the channels.

16. Use according to Claim 15, for which the amount of catalyst that is deposited on said structure is between 50 to 240 g/L for filtering structures and between 50 and 320 g/L for structures with open channels.

17. Use according to one of Claims 14 to 16, for which the catalyst is combined with a binder such as ceria, zirconium oxide, alumina, non-zeolitic silica-alumina, titanium oxide, a mixed oxide of ceria-zirconia type, a tungsten oxide and/or a spinel in order to be formed by deposition in the form of a coating.

18. Use according to one of Claims 14 to 17, for which said coating is combined with another coating having the capacity to adsorb pollutants, in particular NOx, to reduce pollutants, in particular NOx, or to promote the oxidation of pollutants.

19. Use according to Claim 13, for which said catalyst is in the form of an extrudate, containing up to 100% of said catalyst.

20. Use according to one of Claims 13 to 19, for which the structure coated with said catalyst or obtained by extrusion of said catalyst is integrated into an exhaust line of an internal combustion engine.

FIG. 1

FIG. 2

## FIG. 3

cps

2Thêta  ( Coupled TwoTheta/Theta)   WL=1,54060

## FIG. 4

cps

2Thêta  ( Coupled TwoTheta/Theta)   WL=1,54060

FIG. 5

FIG. 6

FIG. 7

# RÉFÉRENCES CITÉES DANS LA DESCRIPTION

**Documents brevets cités dans la description**

- US 6182443 B
- US 6471924 B
- US 8105559 B
- US 20150158019 A1
- US 20190217269 A1
- WO 2016135465 A1
- WO 2017001828 A
- WO 2019186163 A1
- WO 2020039015 A1
- US 20200061595 A1
- WO 2015085303 A1
- WO 2019224090 A
- WO 2019224091 A

**Littérature non-brevet citée dans la description**

- *Catal Lett*, 2016, vol. 146, 1706-1711
- **R. VAN HARDEVELD** ; **F. HARTOG**. The statistics of surface atoms and surface sites on metal crystals. *Surface Science*, 1969, vol. 15, 189-230